# EUROPÄISCHE PATENTSCHRIFT

(11) **EP 3 144 185 B1**
(45) Veröffentlichungstag und Bekanntmachung des Hinweises auf die Patenterteilung: **06.06.2018**
(21) Anmeldenummer: 16181164.1
(22) Anmeldetag: 26.07.2016
(51) Int. Cl.: B60R 5/04

(54) **ABDECKVORRICHTUNG ZUR ANORDNUNG IN EINEM KRAFTFAHRZEUG SOWIE VERFAHREN ZU DEREN HERSTELLUNG**
COVERING DEVICE FOR ARRANGEMENT IN A MOTOR VEHICLE AND METHOD FOR THE PRODUCTION THEREOF
DISPOSITIF DE PROTECTION A MONTER DANS UN VEHICULE ET SON PROCEDE DE FABRICATION

(30) Priorität: 17.09.2015 DE 102015115740
(43) Veröffentlichungstag der Anmeldung: 22.03.2017
(73) Patentinhaber: Johann Borgers GmbH, 46397 Bocholt (DE)
(72) Erfinder: AIT OULAHYANE, Youssef, 46397 Bocholt (DE)
(74) Vertreter: Viering, Jentschura & Partner mbB Patent- und Rechtsanwälte

(56) Entgegenhaltungen:
- JP-A- 2009 149 131
- JP-A- 2010 047 116

## Beschreibung

Die Erfindung richtet sich auf eine Abdeckvorrichtung, insbesondere Gepäckraumabdeckung und/oder Hutablage, die ein erstes, in einem Kraftfahrzeug, insbesondere einem Personenkraftwagen, anordenbares, in seiner Einbauposition im Kraftfahrzeug erstes hinteres Ablageformteil und ein in einem Anlenkbereich an das erste Ablageformteil um eine Schwenkachse verschwenkbar angelenktes zweites, in seiner Einbauposition im Kraftfahrzeug einen oberen Bereich einer Rücksitzlehne zugewandtes, vorderes Ablageformteil sowie mindestens eine den die Schwenkachse umfassenden Anlenkbereich übergreifende und ein elastisches Federelement aufweisende Rückstelleinrichtung umfasst, die an dem ersten und dem zweiten Ablageformteil befestigt ist und die in der Einbauposition von erstem und zweitem Ablageformteil im Kraftfahrzeug bei Angreifen einer von der Rücksitzlehne auf das zweite Ablageformteil ausgeübten Verschwenkkraft ein Verschwenken des zweiten Ablageelementes aus seiner Grundstellung gegen die von dem elastischen Federelement ausgeübte Rückstellkraft in eine Klappstellung ermöglicht, wobei die von dem Federelement ausgehende vorgespannte Rückstellkraft bei Nachlassen oder Fortfall der von der Rücksitzlehne ausgeübten Verschwenkkraft das zweite Ablageformteil in seine Grundstellung zurückbewegt.

Die Erfindung richtet sich weiterhin auf ein Verfahren zur Herstellung einer solchen Abdeckvorrichtung.

In Fahrzeugen angeordnete Abdeckvorrichtungen dienen primär der zumindest teilweisen Abdeckung eines darunter befindlichen Raumes. Bei besagtem Raum handelt es sich zumeist um einen Gepäckraum, so dass derartige Abdeckvorrichtungen auch als Gepäckraumabdeckungen, bisweilen auch noch unter dem ursprünglichen Ausdruck Hutablage bekannt sind. Im Rahmen der Erfindung wird im weiteren Verlauf vereinfachend der Ausdruck Abdeckvorrichtung einheitlich hierfür verwendet. In ihrer Einbausituation erstreckt sich besagte Abdeckvorrichtung im Wesentlichen waagerecht zwischen einer zumeist im Fond gelegenen hinteren Sitzanordnung des Fahrzeugs und dessen Heckscheibe. Selbstverständlich sind auch Ausführungen möglich, bei denen durch Wegfall des Fonds der Gepäckraum durch die vordere Sitzanordnung gegenüber dem Fahrgastraum abgegrenzt ist. Je nach Ausführung des Fahrzeugs kann die Heckscheibe dabei an einer Heckklappe angeordnet sein oder beispielsweise an einen Kofferraumdeckel angrenzen.
In ihrer bestimmungsgemäßen Anordnung ist die Abdeckvorrichtung in der Lage, den jeweiligen Gepäckraum und dessen möglichen Inhalt wirksam vor direkter Sonneneinstrahlung und fremden Einblicken zu schützen. Letzteres dient im Wesentlichen der Prävention eines Einbruchs in das Fahrzeug. Darüber hinaus können Abdeckvorrichtungen zur Insassensicherung beitragen, indem der im Gepäckraum befindliche Inhalt während einer Verzögerung des Fahrzeugs (Bremsen, Anprall) vor einem Eindringen in den Fahrgastraum zurückgehalten wird. Unabhängig davon dienen Abdeckvorrichtungen vermehrt auch als akustisch wirksame Bauteile sowie als Träger weiterer Anbauteile wie beispielsweise Rollos oder Lautsprechern, um nur einige zu nennen.

Vor dem Hintergrund eines möglichst wirtschaftlichen Betriebs des jeweiligen Fahrzeugs werden mitunter hohe Anforderungen an das Gewicht von Abdeckvorrichtungen bei gleichzeitig hoher Stabilität gestellt. Aus diesem Grund können wenigstens bereichsweise geeignete Verbundwerkstoffe eingesetzt werden, welche ein vorteilhaftes Verhältnis von Gewicht zu Stabilität aufweisen. Die verwendeten Verbundwerkstoffe basieren in der Regel auf einem zunächst formlosen Faserwerkstoff. Durch dessen Einbettung in eine aushärtbare Matrix aus Kunststoff können Abdeckvorrichtungen damit auch anspruchsvolle Formgebungen erhalten. Hierzu werden Vorrichtungen mit einer entsprechend formgebenden Kavität eingesetzt, in denen der Faserwerkstoff eingelegt und geformt wird.

Sowohl bei vorderen als auch bei hinteren Sitzanordnungen ist es bekannt, diese zumindest teilweise beispielsweise in ihrer Neigung oder Anordnung relativ zum restlichen Fahrzeug verlagerbar auszubilden. Mit anderen Worten kann auf diese Weise eine Sitzanordnung in Längsrichtung des Fahrzeugs verschieblich angeordnet sein und/oder beispielsweise deren Rückenteil eine Verstellung in der Neigung zulassen. Unabhängig von der jeweiligen Verstell- und/oder Verschieblichkeit der Sitzanordnung wirkt sich eine Verlagerung unmittelbar auf deren relative Lage gegenüber der Abdeckvorrichtung aus.

Aufgrund der relativen Verlagerungsmöglichkeit der Sitzanordnung in Richtung weg von der Abdeckvorrichtung ist häufig ein zumindest unschöner Spalt zwischen der Abdeckvorrichtung und einer zugeordneten Rücksitzlehne ausgebildet. Mit zunehmender Breite des zwischen Abdeckvorrichtung und Sitzanordnung gelegenen Spaltes können neben der zunehmenden Einsehbarkeit in den Gepäckraum mitunter auch die weiteren Funktionen der Abdeckvorrichtung negativ beeinflusst werden, wie beispielsweise deren akustisch dämpfende bzw. dämmende Wirkung sowie deren Rückhaltefunktion in Bezug auf im Gepäckraum befindliche, gegenüber ihrer Bewegung ungesicherte Güter.

Um dennoch eine möglichst ohne klaffenden Spalt ausgestattete und somit gleichbleibende Abdeckung des Gepäckraums zu ermöglichen, sind aus der DE 60 2004 001 689 T2 bereits in Bezug auf die Tiefe des Gepäckraums veränderliche Systeme bekannt. Deren Ausgestaltung ermöglicht eine dynamische Anpassung der Abdeckvorrichtung hinsichtlich ihrer sich in Längsrichtung des Fahrzeugs erstreckenden Tiefe an die jeweilige Lage der Sitzanordnung. So kann die Hutablage beispielsweise zwei ineinander verschiebliche Formteile umfassen, von denen ein an eine Sitzanordnung angrenzendes Formteil mit der Sitzanordnung gekoppelt ist. Hierdurch wird eine Längen- bzw. Tiefenveränderung der Hutablage in Längsrichtung des Fahrzeugs ermöglicht, indem ein vorderes Ablageformteil bei einer Verlagerung der Sitzanordnung in ein demgegenüber stationär angeordnetes hinteres Ablageformteil der Abdeckvorrichtung geschoben oder - in Gegenrichtung - aus dieser herausgezogen wird.

Die DE 60 2004 001 689 T2 offenbart zudem eine zwei gelenkig miteinander verbundene Ablageformteile umfassende Abdeckvorrichtung eines Kraftfahrzeugs. Ein mit einer Sitzanordnung gekoppelte vordere Ablageformteil ist dabei in zwei Abschnitte unterteilt, welche ebenfalls gelenkig miteinander verbunden sind. Auf diese Weise kann das vordere Ablageformteil bei einer Annäherung der Sitzanordnung in sich zusammengefaltet werden. Umgekehrt kann das vordere Ablageformteil bei einer in Gegenrichtung erfolgenden Verlagerung der Sitzanordnung wieder auseinandergefaltet werden. Die Bildung eines Spaltes wird dadurch verhindert, dass das vordere Ablageformteil an der Sitzlehne der Sitzanordnung befestigt ist.

Aus der DE 101 09 651 A1 geht eine Abdeckvorrichtung für ein Fahrzeug hervor, welche zwei in Längsrichtung des Fahrzeugs relativ gegeneinander verschieblich gelagerte Ablageformteile umfasst. Das an die Sitzanordnung angrenzende vordere Ablageformteil ist in Form eines gegenüber dem anderen hinteren Ablageformteil kürzeren Ansatzes gelenkig an der Rückenlehne der Sitzanordnung angelenkt. Dabei ist dieses vordere Ablageformteil mit einer Federkraft beaufschlagt, so dass es gegenüber der Rückenlehne waagerecht ausrichtbar und von unten an das stationär anordenbare hintere Ablageformteil anlegbar ist. Bei Bedarf kann das vordere Anlageformteil entgegen der Federkraft manuell nach unten geklappt und an der Rückenlehne anliegend über eine geeignete Vorrichtung arretiert werden. Aufgrund der teilweisen Überdeckung der beiden Ablageformteile ist auch bei einer relativen Verlagerung der Sitzanordnung in Längsrichtung des Fahrzeugs eine Abdeckung des ansonsten zwischen der Rückenlehne der Sitzanordnung und dem hinteren Ablageformteil entstehenden Spaltes sichergestellt.

Mit der DE 195 37 768 C1 wurde eine Abdeckvorrichtung für ein Fahrzeug bekannt, welche im Wesentlichen ein Rollo umfasst. Hierzu ist ein Rollo-Gehäuse vorgesehen, welches in der Nähe der Rückenlehne der Sitzanordnung im Fahrzeug anordenbar ist. Aufgrund der Erstreckung des Rollo-Gehäuses quer zur Längsrichtung des Fahrzeugs kann eine innerhalb des Rollo-Gehäuses befindliche aufgewickelte Rollobahn aus diesem heraus in Richtung der Heckscheibe des Fahrzeugs gezogen werden. Bei entsprechend arretierten Rolle ist auf diese Weise der Gepäckraum im Wesentlichen durch die Rollobahn abgedeckt. Der zwischen dem Rollo-Gehäuse und der Rückenlehne vorhandene und sich bei einer Verlagerung der Sitzanordnung in Längsrichtung des Fahrzeugs in seiner Breite verändernde Spalt wird dabei mit einer Abdeckfahne überbrückt. Hierzu ist die Abdeckfahne gelenkig an dem Rollo-Gehäuse angelenkt. Weiterhin ist ein an dem Rollo-Gehäuse angeordneter und parallel zu diesem verlaufender Längsprofilabschnitt vorgesehen, welcher einen zum Abstützen der Abdeckfahne vorgesehenen Stützschenkel besitzt. Im darauf aufgestützten Zustand ist die Abdeckfahne im Wesentlichen waagerecht ausgerichtet, wobei sie sich zwischen dem Rollo-Gehäuse und der Rückenlehne der Sitzanordnung erstreckt. Bei einer Annäherung der Sitzanordnung an das Rollo-Gehäuse kann die auf einem oberen gerundeten Bereich der Rückenlehne aufliegende Abdeckfahne nach oben verschwenkt werden.

Der DE103 35 055 A1 ist eine Abdeckvorrichtung für ein Fahrzeug zu entnehmen, welche ein erstes hinteres Ablageformteil, das als Scharnierträger ausgebildet und mit einem Rollogehäuse verbunden ist, und ein zweites vorderes Ablageformteil in Form einer Abdeckklappe umfasst. Durch einen Schlitz des Gehäuses hindurch ist aus diesem heraus ein Abschnitt eines Rollos zum hinteren Teil des Fahrzeugs hin ausziehbar, wodurch ein Gepäckraum des Fahrzeugs zumindest bereichsweise abdeckbar ist. Alternativ hierzu kann die Abdeckklappe mit einem weiteren Ablageformteil zu der Abdeckvorrichtung kombiniert sein. Unabhängig von der jeweiligen Kombination wird ein zu der Rückenlehne einer zugeordneten Sitzanordnung verbleibender Spalt mit Hilfe des vorderen Ablageformteils verdeckt, welches hierzu gelenkig mit dem hinteren Ablageformteil verbunden ist. Die Anlenkung erfolgt mittels eines Filmscharniers. Das Filmscharnier bildet eine Rückstelleinrichtung aus, welche das vordere Ablageformteil im freien Zustand - also ohne Kontakt mit der Sitzanordnung - in einer im Wesentlichen horizontal ausgerichteten Grundstellung hält. Bei einem Kontakt der Sitzanordnung mit der Abdeckvorrichtung und einer dadurch bewirkten Kraftausübung auf das vordere Ablageformteil wird das vordere Ablageformteil unter Aufbau einer innerhalb der Rückstelleinrichtung entstehenden Gegenkraft aus seiner Grundstellung heraus in eine Klappstellung verschwenkt. Aufgrund der aufgebauten Gegenkraft erfolgt ein Rückschwenken des vorderen Ablageformteils in seine Grundstellung bei nachlassender Kraftausübung in einem der relativen Verlagerung zwischen Abdeckvorrichtung und Sitzanordnung entsprechenden Maße. Die Rückstelleinrichtung ist dabei im Wesentlichen durch ein elastisches Zwischenelement aus einem im Querschnitt runden Schaumstoff gebildet, welches zumindest teilweise von einem nicht-elastischen Zugband aus einer Kunststofffolie überspannt wird. Bei einem Verschwenken des vorderen Ablageformteils wird eine Zugkraft auf das Zugband ausgeübt, woraufhin das elastische Zwischenelement unter Aufbau der Gegenkraft reversibel komprimiert wird. Aufgrund des Bestrebens des elastischen Zwischenelements zur erneuten Expansion bleibt die auf das Zugband ausgeübte Zugkraft erhalten, welche bei einer Verlagerung der Sitzanordnung das vordere Ablageformteil in seine Grundstellung zurück aufrichtet.

Die genannten Systeme sind noch mit Nachteilen verbunden. Abdeckvorrichtungen mit einem zweigeteilten, verschieblich gegenüber einem vorderen Formteil ausgebildeten hinteren Formteil begrenzen den Platz für weitere an der Hutablage anordenbare Anbauteile. Auch ist durch derartige Ausgestaltungen die praxisgerechte Handhabung heutiger Sitzanordnungen erschwert, welche beispielsweise neben dem Umklappen einer Rückenlehne auch deren mitunter vollständige Entfernung aus dem Fahrzeug heraus ermöglichen. Ursächlich hierfür ist die bei diesen bekannten Hutablagen zumeist notwendige Kopplung mit der Sitzanordnung, welche vor einer entsprechenden Handhabung der Sitzanordnung eine vorherige Entkopplung verlangt. Deutliche Verbesserungen weisen demgegenüber solche Systeme auf, welche ohne besagte Kopplung mit der Sitzanordnung auskommen. Allerdings kann durch deren Ausgestaltung sowie Ausbildung der Rückstelleinrichtung nicht immer sichergestellt werden, dass eine ideale Ausrichtung zwischen Sitzanordnung und Abdeckklappe vorherrscht, woraus ein mitunter unerwünschtes Schwingen der Abdeckklappe und/oder gar eine nicht mögliche Verlagerung der Sitzanordnung durch die sich quasi zwischen Rückenlehne und restlicher Abdeckvorrichtung verklemmende Abdeckklappe resultieren kann. Auch bleibt häufig ein unschöner Spalt zwischen einer Rücksitzlehne und der Abdeckvorrichtung sichtbar. Angesichts dieser Erkenntnis bieten die derzeit bekannten, in Bezug auf ihre Tiefe innerhalb des Fahrzeugs veränderlichen Abdeckvorrichtungen für Fahrzeuge daher auch weiterhin noch Raum für Verbesserungen.

Eine Vorrichtung ist auch aus der FR 2 889 496 A1 bekannt. Dieses Dokument offenbart eine Gepäckraumabdeckung, die ein erstes hinteres Ablageformteil und ein in einem Anlenkbereich an das erste Ablageformteil um eine Schwenkachse verschwenkbar angelenktes zweites, vorderes Ablageformteil umfasst. In dem die Schwenkachse umfassenden Anlenkbereich ist ein elastisches Federelement angeordnet, das ein Verschwenken des vorderen Ablageformteils in eine Klappstellung ermöglicht, in welche das vordere Ablageformteil gebracht wird, wenn dort die Kraft einer Rücksitzlehne des Kraftfahrzeuges angreift. Sobald diese Kraft nachlässt, schwenkt das vordere Ablageformteil in seine Ausgangsstellung zurück. Eine in gleicher Weise aufgebaute Gepäckraumabdeckung ist auch aus der FR 2 895 711 A1 bekannt. Diese beiden Ausführungsformen einer Gepäckraumabdeckung unterscheiden sich hinsichtlich der Ausbildung des jeweiligen elastischen Federelementes, was bei der Gepäckraumabdeckung nach der FR 2 889 496 A1 streifenförmig nach Art einer Blattfeder und bei der Gepräckraumabdeckung nach der FR 2 895 711 A1 in Form eines elastisch verformbaren Elementes ausgebildet ist, wobei aber beide Federelemente jeweils ortsfest an beiden Ablageformteilen befestigt sind.

Eine weitere Gepäckraumabdeckung ist zudem aus der FR 2 921 606 A1 bekannt, bei welcher das vordere Ablageformteil in einer Haltevorrichtung des hinteren Ablageformteils verschwenkbar gelagert ist. Eine Feder ist bei dieser Gepäckraumabdeckung mit ihrem einen Ende ortsfest an dem vorderen Ablageformteil und mit ihrem anderen Ende an dem hinteren Ablageformteil befestigt.

Aus der JP 2010 047116 A ist eine Abdeckvorrichtung bekannt, die ein erstes, in einem Kraftfahrzeug anordenbares, in seiner Einbauposition im Kraftfahrzeug hinteres Ablageformteil und ein in einem Anlenkbereich an das erste Ablageformteil um eine Schwenkachse verschwenkbar angelenktes zweites, in seiner Einbauposition im Kraftfahrzeug einem oberen Bereich einer Rücksitzlehne zugewandtes, vorderes Ablageformteil sowie mindestens eine den die Schwenkachse umfassenden Anlenkbereich übergreifende und ein elastisches Federelement aufweisende Rückstelleinrichtung umfasst, die an dem ersten und dem zweiten Ablageformteil befestigt ist und die in der Einbauposition von erstem und zweitem Ablageformteil im Kraftfahrzeug bei Angreifen einer von der Rücksitzlehne auf das zweite Ablageformteil ausgeübten Verschwenkkraft ein Verschwenken des zweiten Ablageelementes aus seiner Grundstellung gegen die von dem elastischen Federelement ausgeübte Rückstellkraft in eine Klappstellung ermöglicht, wobei die von dem Federelement ausgehende vorgespannte Rückstellkraft bei Nachlassen oder Fortfall der von der Rücksitzlehne ausgeübten Verschwenkkraft das zweite Ablageformteil in seine Grundstellung zurückbewegt, wobei das zweite Ablageformteil in seiner Grundstellung eine durch die Rückstellkraft des an einer Gleitfläche der mindestens einen Rückstelleinrichtung entlanggeführten Federelementes bewirkte, zur Ausrichtung des ersten Ablageformteils geringfügig geneigt ausgerichtete Position aufweist und einnimmt, die in der Einbauposition der Abdeckvorrichtung im Kraftfahrzeug eine geringfügig auf die Rücksitzlehne zu geneigte Ausrichtung ausbildet und wobei die den Anlenkbereich übergreifende mindestens eine Rückstelleinrichtung zwei voneinander beabstandete Grundplatten umfasst, von denen die erste Grundplatte mit dem hinteren Ablageformteil und die zweite Grundplatte mit dem vorderen Ablageformteil verbunden ist, wobei die erste und die zweite Grundplatte mittels des den Anlenkbereich übergreifenden Federelements gegeneinander verschwenkbar miteinander gekoppelt sind.

Vor diesem Hintergrund liegt der vorliegenden Erfindung die Aufgabe zugrunde, eine Lösung zu schaffen, die es ermöglicht, eine zwei gelenkig miteinander verbundene Ablageformteile umfassende Abdeckvorrichtung für ein Fahrzeug, insbesondere ein Kraftfahrzeug, bereitzustellen, welche eine durch ein Verschwenken eines der Ablageformteile ermöglichte dynamische Anpassung an eine sich verändernde Lage einer Sitzanordnung relativ zur Abdeckvorrichtung sicherstellt, wobei eine zumindest geringfügig geneigte Ausrichtung eines hinteren, ersten Ablageformteils gegenüber einem vorderen, zweiten Ablageformteil vorteilhaft erreicht wird.

Diese Aufgabe wird erfindungsgemäß durch eine Abdeckungsvorrichtung gemäß Anspruch 1 und ein Verfahren gemäß Anspruch 17 gelöst.

Vorteilhafte Weiterbildungen und Ausgestaltungen sind Gegenstand der Unteransprüche.

Bei einer Abdeckvorrichtung der eingangs näher bezeichneten Art wird die Aufgabe erfindungsgemäß dadurch gelöst, dass das zweite Ablageformteil in seiner Grundstellung eine durch die Rückstellkraft des an einer keilförmigen Gleitfläche der mindestens einen Rückstelleinrichtung entlang geführten Federelementes bewirkte, zur Ausrichtung des ersten Ablageformteils geringfügig geneigt ausgerichtete Position aufweist und einnimmt, die in der Einbauposition der Abdeckvorrichtung im Kraftfahrzeug eine geringfügig auf die Rücksitzlehne zu geneigte Ausrichtung ausbildet.

Der sich hieraus ergebende Vorteil liegt primär in der bereits in der Grundstellung der Abdeckvorrichtung geringfügig geneigten Ausrichtung des in Bezug auf seine Einbauposition im Kraftfahrzeug vorderen zweiten Ablageformteils gegenüber dem ersten Ablageformteil. Auf diese Weise schließen die beiden Ablageformteile grundsätzlich auch im freien Zustand einen Winkel von wenn auch nur geringfügig kleiner 180° zwischen sich ein. Hierbei geht die Erfindung davon aus, dass das in Bezug auf seine Einbauposition im Kraftfahrzeug hintere erste Ablageformteil bezüglich seiner Erstreckung in Längsrichtung des Fahrzeugs zumindest im Wesentlichen parallel zu einer Horizontalen ausgerichtet angeordnet ist und eine Verlagerbarkeit der Sitzanordnung oder Teile hiervon zumindest im Wesentlichen parallel zu dieser Horizontalen erfolgt.

Dies meint, dass das verschwenkbare zweite Ablageformteil hinsichtlich seiner Erstreckung in Längsrichtung des Fahrzeugs grundsätzlich in einem wenn auch nur geringfügigen Winkel zur Richtung einer von der Rücksitzlehne auf das zweite Ablageformteil ausgeübten oder ausübbaren Verschwenkkraft ausgerichtet ist. Aufgrund der sich hieraus ergebenden günstigen Winkelverhältnisse ist stets eine vertikal ausgerichtete Komponente der Verschwenkkraft vorhanden, welche auf das zweite Ablageformteil trifft und dieses im Sinne eines Hebels um die Schwenkachse des Anlenkbereiches herum nach unten zum Fahrzeugboden hin verschwenkt. Demgegenüber kann es bei einer - wie aus dem Stand der Technik bekannten - Ausrichtung des zweiten Ablageformteils mit im Wesentlichen horizontaler und parallel zur Richtung der Verschwenkkraft gerichteten Lage zu einem Blockieren bei der Verlagerbarkeit der Sitzanordnung kommen, da es hierbei an einer das Verschwenken einleitenden vertikalen Komponenten der Verschwenkkraft fehlen kann.

Weiterhin umfasst die Erfindung die den Anlenkbereich übergreifende mindestens eine Rückstelleinrichtung zwei voneinander beabstandete Grundplatten. Von diesen Grundplatten ist eine erste Grundplatte mit dem hinteren, ersten Ablageformteil verbunden, während eine zweite Grundplatte mit dem vorderen, zweiten Ablageformteil verbunden ist. Dabei sind die erste und die zweite Grundplatte mittels des den Anlenkbereich übergreifenden Federelements gegeneinander verschwenkbar miteinander gekoppelt.

Bei den Grundplatten kann es sich bevorzugt um mittels Spritzguss hergestellte Elemente handeln, die im Spritzgussverfahren ihre gewünschte Form erhalten.

Je nach Ausgestaltung kann die Verbindung zwischen den Grundplatten und den zugehörigen Ablageformteilen beispielsweise über geeignete Verbindungsmittel erfolgen. Bei diesen kann es sich beispielsweise um lösbare Verbindungsmittel wie etwas Schrauben handeln. Auch kann die Verbindung zumindest bereichsweise formschlüssig erfolgen, wobei die jeweilige Grundplatte der Rückstelleinrichtung beispielsweise in eine geeignete Vertiefung des zugehörigen Ablageformteils greift. Besonders bevorzugt können die Grundplatten bereits im Zuge der Fertigung der Ablageformteile mit diesen verbunden werden.

Insbesondere bei einer Herstellung der Ablageformteile aus einem thermoplastische Fasern umfassenden Faserwerkstoff kann der Kunststoff nach seiner Aushärtung dazu dienen, die beiden Grundplatten der Rückstelleinrichtung stoffschlüssig anzubinden. Bei besagtem Kunststoff kann es sich beispielsweise um einen thermoplastischen aber auch einen duroplastischen Kunststoff handeln. In diesem Zusammenhang können die Grundplatten auf ihren den Ablageformteilen zugewandten Rückseiten eine deren Oberfläche vergrößernde Struktur aufweisen, um eine möglichst stabile Verbindung zu erhalten. Bei der Struktur kann es sich beispielsweise um eine Rippenstruktur handeln.

In der zuvor erläuterten Ausgestaltung kann die Rückstelleinrichtung auch als scharnierartig bezeichnet werden, wobei jene die Schwenkachse ausbildende gelenkige Verbindung zwischen den beiden Ablageformteilen angeordnet ist und die quasi aufgesetzte Rückstelleinrichtung die Schwenkachse überspannt.

Unabhängig davon ist selbstverständlich auch eine alternative Ausgestaltung denkbar, bei der die beiden Grundplatten der Rückstelleinrichtung gelenkig miteinander verbunden sein können und so die Schwenkachse direkt an der Rückstelleinrichtung ausgebildet ist. Hierdurch könnten die beiden Ablageformteile dann über die Rückstelleinrichtung selbst gelenkig miteinander verbunden sein:

In Bezug auf die keilförmige Gleitfläche ist nach der Erfindung vorgesehen, dass diese an der Rückstelleinrichtung, insbesondere an deren zweiten Grundplatte, ausgebildet ist. Dabei steigt die keilförmige Gleitfläche zu dem ersten Ablageformteil und zu der ersten Grundplatte hin mit einer Steigung zwischen 5° und 10°, insbesondere 7,5°, an und gleitet ein Schenkel, insbesondere der zweite Schenkel, des Federelementes beim gegeneinander Verschwenken von erstem und zweitem Ablageformteil an der Gleitfläche entlang.

Hiernach ist der zweite Schenkel des Federelements so angeordnet und ausgestaltet, dass dieser zumindest abschnittsweise gegen die keilförmige Gleitfläche abstützbar ist. Insbesondere bei der zuvor aufgezeigten Ausgestaltung der Stützvorrichtung, welche eine rotatorische und eine translatorische Bewegung verlangt, kann der dabei verschieblich geführte zweite Schenkel mit zunehmender Entfernung der beiden Grundplatten der Rückstelleinrichtung voneinander auf die keilförmige Gleitfläche auflaufen. Der sich hieraus ergebende Vorteil liegt in dem Anheben des zweiten Schenkels des Federelements während dessen relativer Verschiebung gegenüber der zweiten Grundplatte. Insbesondere bei einer Verschiebung des zweiten Schenkels in Richtung seines freien Endes wird so sichergestellt, dass dessen Ende angehoben wird und somit beispielsweise keine etwaige Beschädigung der zweiten Grundplatte hervorrufen kann.

Weiterhin weist das an der keilförmige Gleitfläche entlanggeführte Federelement an einem freien Ende seines zweiten Schenkels einen Hakenabschnitt auf. Besagter Hakenabschnitt wirkt mit einem Zapfen zusammen, welcher an der höchsten Stelle der keilförmigen Gleitfläche auf deren dem ersten Ablageformteil und der ersten Grundplatte zugewandten Seite angeordnet ist. Der Zapfen wirkt beim Erreichen der Grundstellung des vorderen, zweiten Ablageformteils als Anschlag für den Hakenabschnitt des Federelements, wobei der Hakenabschnitt den Zapfen bei Erreichen der Grundstellung zumindest teilweise umgreift.

Insbesondere durch die Ausgestaltung des Federelements in Bezug auf den Hakenabschnitt in Kombination mit der keilförmigen Gleitfläche und/oder dem Zapfen der Rückstelleinrichtung lässt sich die erfindungsgemäß zumindest geringfügig geneigte, vorteilhafte Ausrichtung des vorderen, zweiten Ablageformteils gegenüber dem hinteren, ersten Ablageformteil besonders vorteilhaft erreichen.

Als weiterer Vorteil ist die Anordnung der keilförmigen Gleitfläche zu nennen, an der das Federelement entlanggeführt ist. Aufgrund der durch die Keilform gegenüber der Schwenkachse zunehmend weiter beabstandeten Oberfläche der Gleitfläche ist das zweite Ablageformteil über wenigstens zwei voneinander beabstandete Punkte an dem ersten Ablageformteil abgestützt, so dass sich eine überaus schwingungsfrei oder zumindest schwingungsarm frei auskragende Ausrichtung des zweiten Ablageformteils über dem abzudeckenden Raum ergibt.

Insbesondere im Zusammenhang mit einer rotatorischen Bewegung des zweiten Ablageformteils in Kombination mit einer gleichzeitig translatorische Bewegung des Federelements auf der keilförmigen Gleitfläche kann das Federelement zumindest teilweise mit zunehmendem Schwenkwinkel des zweiten Ablageformteils auf die keilförmige Gleitfläche auflaufen. Hierdurch kommt es zu einem zumindest teilweisen Anheben des Federelements auf der keilförmigen Gleitfläche. Auf diese Weise ist einer möglichen Beschädigung der Rückstelleinrichtung vorgebeugt, welche sich beispielsweise durch ein Span anhebendes Kratzen des beispielsweise metallisch ausgeführten Federelements an der Rückstelleinrichtung zumindest nach längerem Gebrauch einstellen könnte.

Da bei einem Verschwenken von erstem Ablageformteil und zweitem Ablageformteil um die Schwenkachse herum aufeinander zu, sich der relative Abstand von die Rückstelleinrichtung ausbildenden Elementen, insbesondere den nachstehend erwähnten Grundplatten, zueinander ändert, bietet die keilförmige Gleitfläche die Möglichkeit, dass auf dieser ein Schenkel eines Federelementes ungestört frei entlanggleiten kann, während sich die jeweiligen Grundplatten unter Verringerung ihres Abstandes zueinander einander nähern. Hierdurch ist es möglich, das vordere und das hintere Ablageformteil einteilig auszubilden und dennoch die Rückstellkraft eines Federelementes, das beispielsweise als Dreh- oder Torsionsfeder ausgebildet ist, auszunutzen. Hierbei kann dann weiterhin die Winkelstellung einer solchen Dreh-oder Torsionsfeder, deren Federstärke und Abmessungen derart ausgebildet sein, dass sich bei dem Anschlag der einzelnen Federbügel oder Federarme an den jeweiligen Grundplatten in der Grundstellung der Abdeckvorrichtung die gewünschte Winkelstellung mit der erfindungsgemäßen geringfügig geneigten Ausrichtung auf die zugeordnete Sitzanordnung oder Rücksitzlehne ausgebildet ist.

Weiterhin ist durch die geringfügig geneigt verlaufende Ausrichtung des vorderen Ablageformteils in seiner Grundstellung ein eventuell noch vorhandener Spalt zur Rücksitzlehne optisch in der Regel verschwunden, da die in der Regel einen gleichartig wie das vordere Ablageformteil gerichteten Neigungsverlauf aufweisende Rücksitzlehne diesen Spalt optisch zumindest bei Blickrichtung von oben zumindest im Wesentlichen verdeckt.

Auch wenn im Rahmen dieser Anmeldung von einer Rücksitzlehne die Rede ist, so kann es natürlich durchaus auch sein, dass die erfindungsgemäße Abdeckvorrichtung unmittelbar an einem Vordersitz angeordnet ist. Insofern stellt der Begriff "Rücksitzlehne" im Rahmen dieser Patentanmeldung ein Synonym auch für eine Vordersitzlehne dar.

Die vorstehende Aufgabe wird auch gelöst durch ein Verfahren zur Herstellung einer Abdeckvorrichtung, insbesondere einer Gepäckraumabdeckung und/oder einer Hutablage nach einem der Ansprüche 1-16 für ein Kraftfahrzeug, das sich dadurch auszeichnet, dass in ein beheiztes Press- und/oder Schweiß- und/oder Formwerkzeug mindestens eine bereits ein elastisches Federelement aufweisende und nach Maßgabe eines oder mehrerer der Ansprüche 1-16 ausgebildete Rückstelleinrichtung eingelegt und in dem Press- und/oder Schweiß- und/oder Formwerkzeug auf ihrer dem Federelement abgewandten Seite mit einem das erste und das zweite Ablageformteil ausbildenden Faservliesmaterial in Kontakt gebracht wird und unter Einwirkung eines eine thermoplastischen Verformung des Faservliesmaterials bewirkenden Formgebungsverfahrens das Faservliesmaterials zu der das erste und das zweite Ablageformteil aufweisenden Abdeckvorrichtung ausgeformt wird, wobei gleichzeitig die mindestens eine Rückstelleinrichtung mit den aus dem Faservliesmaterial geformten Ablageformteilen verbunden wird, insbesondere die erste und die zweite Grundplatte an das jeweils zugeordnete erste oder zweite Ablageformteil angeschweißt werden.

Mit dem erfindungsgemäßen Verfahren lässt sich in vorteilhafter Weise eine Abdeckvorrichtung herstellen, welche die vorstehend aufgeführten Vorteile aufweist. Insbesondere lassen sich mit dem erfindungsgemäßen Verfahren Ablageformteile aus einem Faservliesmaterial herstellen, so dass die Ablageformteile ein relativ geringes Gewicht haben und sich mit Hilfe üblicher Federkräfte, insbesondere solcher von Dreh- oder Torsionsfedern, in die gewünschte Grundstellung der Ablageformteile zueinander bewegen lassen.

Die Erfindung sieht als bevorzugte Weiterentwicklung weiterhin vor, dass der keilförmigen Gleitfläche eine seitlich beabstandet zu dieser an dem zweiten Ablageformteil und/oder der Rückstelleinrichtung, insbesondere der zweiten Grundplatte, angeordnete Leiste zugeordnet ist. Dabei ist das Federelement zumindest bereichsweise, insbesondere der zweite Schenkel des Federelements, zwischen der Leiste und der keilförmigen Gleitfläche geführt angeordnet. Durch die Anordnung der Leiste wird eine vorteilhafte seitliche Führung des in seiner Längsrichtung verschieblich an der zweiten Grundplatte abgestützten zweiten Schenkels des Federelements ermöglicht.

Nach einer Fortbildung der Erfindung ist der keilförmigen Gleitfläche ein vertikal beabstandet zu dieser an dem zweiten Ablageformteil und/oder der Rückstelleinrichtung, insbesondere der zweiten Grundplatte, angeordneter Überstand zugeordnet. Besagter Überstand ist dabei so ausgebildet, dass dieser die keilförmige Gleitfläche in deren Längsrichtung zumindest teilweise überspannt und zusätzlich seitlich überragt.

Gemäß einer weiteren vorteilhaften Weiterbildung der Erfindung ist der Überstand an dem die keilförmige Gleitfläche überragenden Zapfen befestigt.

Hierdurch erhält/erhalten das zweite Ablageformteil und/oder die Rückstelleinrichtung, insbesondere deren zweiten Grundplatte oder der Zapfen, eine Art auskragendes Dach. Der Überstand stellt eine Begrenzung für die Bewegung des zweiten Schenkels des Federelements zur Verfügung, so dass der zweite Schenkel nicht unerwünscht weit beispielsweise von der zweiten Grundplatte abgehoben werden kann. Mit anderen Worten beschränkt sich so die in Bezug auf ein Anheben mögliche Bewegungsfreiheit des zweiten Schenkels beispielsweise gegenüber der zweiten Grundplatte auf einen zwischen den sich gegenüberliegenden Oberflächen des Überstands und der zweiten Grundplatte oder beispielsweise deren keilförmigen Gleitfläche.

Durch die Anordnung des Überstands ist sichergestellt, dass der zweite Schenkel grundsätzlich in gewünschter Weise an dem zweiten Ablageformteil und/oder der Rückstelleinrichtung, insbesondere deren zweite Grundplatte geführt ist und keine unerwünschte Ausrichtung gegenüber dieser einnehmen kann.

Nach einer besonders bevorzugten Weiterbildung beträgt die Neigung zwischen dem ersten Ablageformteil und dem zweiten Ablageformteil in der Grundstellung des zweiten Ablageformteils 8° bis 12°, insbesondere 10°, und/oderschließen die beiden Ablageformteile einen Winkel zwischen sich ein, der in der Grundstellung des zweiten Ablageformteils von 172° bis 168°, insbesondere 170°, beträgt. Bei einer derartigen Ausrichtung des vorderen zweiten Ablageformteils in seiner Grundstellung ergibt sich eine überaus vorteilhafte Winkelstellung gegenüber der Rücksitzlehne. Darüber hinaus kann das zweite Ablageformteil einen geringen Abstand gegenüber der Rücksitzlehne einhalten, ohne den Blick in den Gepäckraum freizugeben. Denn durch die in den Gepäckraum hinein gerichtete Neigung des zweiten Ablageformteils kann eine Schattenfuge zwischen diesem und der Rücksitzlehne ausgebildet werden, welche trotz eines geringen Abstandes den ästhetischen Anforderungen im Sinne der Funktion als Abdeckvorrichtung genügt.

Eine Weiterbildung der Erfindung sieht vor, dass das erste, hintere Ablageformteil in seiner Einbauposition ortsfest im Fahrzeug anordenbar ausgebildet ist. Hierdurch werden eine eindeutige Positionierung des ersten Ablageformteils über dem abzudeckenden Raum und/oder ein geeignetes Widerlager für das verschwenkbar an dem ersten Ablageformteil angeordnete vordere, zweite Ablageformteil erreicht.

Nach einer weiteren Ausgestaltung der Erfindung sind die beiden Ablageformteile zumindest teilweise materialeinheitlich einstückig ausgebildet und/oder durch wenigstens eine Scharnieranordnung oder eine scharnierartig wirkende Materialverbindung gelenkig miteinander verbunden. Alternativ oder in Ergänzung zur einstückigen Ausbildung der Ablageformteile können diese durch wenigstens eine Scharnieranordnung oder eine scharnierartig wirkende Materialverbindung gelenkig miteinander verbunden sein. Hierzu eignen sich beispielsweise Klappscharniere, deren Flügel jeweils mit einem der beiden Ablageformteile verbunden sein können. Auf diese Weise ist eine gelenkige Verbindung zweier zunächst voneinander separierter Ablageformteile möglich oder es kann die bereits bestehende Verbindung über den Faserwerkstoff entsprechend ergänzt werden.

Nach einer bevorzugten Weiterbildung der erfindungsgemäßen Abdeckvorrichtung ist vorgesehen, dass das Federelement der Rückstelleinrichtung als Torsions- oder Drehfeder ausgebildet ist. Dabei ist ein erster Schenkel der Torsions- oder Drehfeder an der ersten Grundplatte der Rückstelleinrichtung gehalten, während ein zweiter Schenkel der Torsions- oder Drehfeder an der zweiten Grundplatte der Rückstelleinrichtung verschiebbar geführt ist. Hierdurch ist das Federelement zumindest mittelbar gegen die beiden zueinander verschwenkbaren Ablageformteile abstützbar, so dass das vordere, zweite Ablageformteil in der Grundstellung gehalten und gegenüber dem hinteren, zweiten Ablageformteil elastisch verschwenkbar ist. Alternativ kann das Federelement auch als Schenkelfeder ausgebildet sein.

Auf diese Weise ist es möglich, die Schwenkachse der beiden Ablageformteile außerhalb der Ebene der Rückstelleinrichtung anzuordnen, während der zweite Schenkel des Federelements auf einer Kreisbahn um die Schwenkachse herum angeordnet ist. Ein Verschwenken der beiden Ablageformteile gegeneinander verlangt insofern eine kombinierte Bewegung aus einer rein rotatorischen Bewegung um die Schwenkachse herum und einer gleichzeitigen translatorischen Bewegung der zweiten Grundplatte der Rückstelleinrichtung gegenüber dem zweiten Schenkel des Federelements oder umgekehrt.

Hierdurch ist eine Art Selbsthemmung hinsichtlich des Verschwenkens des vorderen, zweiten Ablageformteils gegenüber dem hinteren, zweiten Ablageformteil etabliert, da der an sich widerstandslosen Drehbewegung die jeweilige Reibung zwischen dem zweiten Schenkel des Federelements und der zweiten Grundplatte der Rückstelleinrichtung entgegenwirkt. Um nun ein Verschwenken einzuleiten, bedarf es insofern eines Losbrechmoments, um die Haftreibung zwischen zweitem Schenkel und zweiter Grundplatte zu überwinden.

Der sich hieraus ergebende Vorteil macht sich insbesondere bei einer frei auskragenden Anordnung des vorderen, zweiten Ablageformteils bemerkbar, welches hierdurch in einem hohen Maß gegenüber unerwünschtem Schwingen gehalten ist. Ursächlich hierfür ist die Masse eines mit einem Federelement verbundenen Bauteils, welches aufgrund seiner Trägheit insbesondere beim Überfahren unebener Untergründe zunächst aufschwingt. Aufgrund der dem Aufschwingen entgegenwirkenden Rückstellkraft des Federelements stellt sich anschließend ein unerwünschtes Schwingen des Bauteils um dessen Ruhelage ein. Aufgrund der erfindungsgemäßen verschieblichen Führung des zweiten Schenkels des Federelements der Rückstelleinrichtung in Kombination mit der zu dem zweiten Schenkel beabstandeten Schwenkachse zwischen den beiden Ablageformteilen ergeben sich mechanisch gesehen nunmehr zwei Lager, über welche das erste, vordere Ablageformteil an dem zweiten, hinteren Ablageformteil abgestützt ist. Eines der beiden Lager bildet die reine Schwenkachse aus, während das andere entgegen der Haftreibung zwischen dem zweiten Schenkel und der zweiten Grundplatte der Rückstelleinrichtung elastisch zurückweichen kann, um eine Drehung um die Schwenkachse herum zu ermöglichen. Über die Haftreibung kann so die Hemmung gegenüber einem Schwingen des zweiten, vorderen Ablageformteils individuell an das jeweilige erste, hintere Ablageformteil angepasst werden.

Nach einer vorteilhaften Weiterbildung der Erfindung ist ein an der Rückstelleinrichtung, insbesondere an deren ersten Grundplatte, gelagerter Achskörper vorgesehen, welcher sich in einer parallel zu der Schwenkachse beabstandeten Achsrichtung derart durch Windungen des Federelements hindurch erstreckt, dass das Federelement an der Rückstelleinrichtung, insbesondere an deren ersten Grundplatte, festgelegt ist. In Bezug auf die Windungen des Federelements können diese entweder einzelne zueinander beabstandet oder auch mehrfach unmittelbar nebeneinander anliegend angeordnet sein.

In vorteilhafter Weise kann der Achskörper sich dabei in einer parallel zu der Schwenkachse beabstandeten Achsrichtung erstrecken. Der Achskörper ist dazu vorgesehen, das Federelement an der Rückstelleinrichtung, insbesondere an deren ersten Grundplatte festzulegen. Hierzu erstreckt sich der Achskörper durch die wenigstens eine Windung des Federelements hindurch, wodurch das gesamte Federelement an der Rückstelleinrichtung, insbesondere an der ersten Grundplatte gelagert ist. Auf diese Weise ist die wenigstens eine Windung des Federelements klemmfrei gehalten, wodurch deren Schenkel frei gegeneinander verschwenkbar sind.

Nach einer bevorzugten Ausgestaltung der Erfindung ist vorgesehen, dass die Rückstelleinrichtung, insbesondere deren erste Grundplatte, einen Windungen des Federelements zumindest teilweise umgreifenden Gehäuseabschnitt aufweist, welcher zwei die umgegriffenen Windungen des Federelements zwischen sich einschließende Seitenwände aufweist.

Besonders bevorzugt ist hierbei dann eine Ausbildung des Gehäuseabschnitts, bei der in oder an den beiden Seitenwänden des Gehäuseabschnitts ein oder der sich durch Windungen des Federelements hindurch erstreckender Achskörper gelagert ist. Hiernach kann der Gehäuseabschnitt eine geeignete Lagerung des Federelements und gleichzeitig eine zumindest teilweise Abdeckung für dieses zur Verfügung stellen. Letzteres ist insbesondere aus optischen Gründen und zur Vermeidung möglicher Verletzungen bei einem Kontakt mit der Rückstelleinrichtung relevant.

Weiterhin sieht die Erfindung gemäß einer ihrer bevorzugten Weiterbildungen eine zwischen den Windungen des Federelements und dem Achskörper eingegliederte Hülse vor. Auf diese Weise stehen Federelement und Achskörper nur indirekt in einem Kontakt zueinander. Durch geeignete Materialwahl für die Hülse kann insofern ein einfaches Gleiten des Federelements auf dem Achskörper ohne etwaige Geräusche verursachende Reibungen erfolgen.

In Bezug auf die zumindest geringfügige Neigung des zweiten, vorderen Ablageformteils ist nach einer bevorzugten Weiterentwicklung der Erfindung vorgesehen, dass das erste und das zweite Ablageformteil einen Winkel zwischen sich einschließen, der zwischen 172° in der Grundstellung des vorderen, zweiten Ablageformteils und 115° in der Klappstellung des vorderen, zweiten Ablageformteils variiert.

Die Erfindung sieht zudem in Ausgestaltung vor, dass es sich bei der erfindungsgemäßen Abdeckvorrichtung besonders bevorzugt um einen Bestandteil einer Gepäckraumabdeckung eines eine Heckklappe aufweisenden Kraftfahrzeugs, insbesondere eines Kombinations- oder Touringkraftwagens oder eines SUV, handelt.

Gemäß einer vorteilhaften Weiterbildung der Erfindung weist die Rückstelleinrichtung, insbesondere deren erste und/oder die zweite Grundplatte, auf ihrer die keilförmigen Gleitfläche und/oder das Federelement tragenden Seite eine aufrecht hervorstehende taschenförmige Erhebung auf. Die Erhebung ist dabei so ausgebildet, dass diese an eine in einem Schweiß- und/oder Press- und/oder Formwerkzeug entsprechend ausgeformte Vertiefung angepasst ist. Hierdurch ist die Erhebung bei der Herstellung von erstem und zweitem Ablageformteil mittels eines thermischen Formgebungsverfahrens in besagte Vertiefung einlegbar. Der sich aus der Anordnung der Erhebung ergebende Vorteil liegt in einer genauen Positionierbarkeit der einzelnen miteinander zu verbindenden Teile der erfindungsgemäßen Abdeckvorrichtung während der Herstellung, insbesondere mit dem erfindungsgemäßen Verfahren.

Die Erfindung sieht in einer vorteilhaften Weiterbildung daher auch vor, dass das erste und das zweite Ablageformteil als ein einteiliges, insbesondere thermoplastische und/oder textile Fasern umfassendes, Faservliesformteil ausgebildet und insbesondere mittels eines thermischen Formgebungsverfahrens hergestellt sind.

Mit der vorliegenden Erfindung wird eine in Bezug auf die Tiefe eines abzudeckenden Raums veränderliche Abdeckvorrichtung bereitgestellt, welche sich beispielsweise zur Abdeckung eines Gepäckraums in einem eine oder mehrere Sitzreihen aufweisenden Fahrzeug, insbesondere Kraftfahrzeug, eignet.

Insbesondere bei einem mit einem Heckmotor ausgestatteten Fahrzeug kann die erfindungsgemäße Abdeckvorrichtung selbstverständlich auch zur Abdeckung des entsprechenden Motorraums und/oder eines Zwischenraums zwischen Fahrgastraum und Motorraum dienen. Der im Rahmen der Erfindung vereinfachend verwendete Ausdruck "Rücksitzlehne" steht insofern sinngemäß für die Rückenlehne jedweder Sitzanordnung, bei welcher es sich - beispielsweise bei einem Fahrzeug mit nur einer Sitzreihe - selbstverständlich auch um eine vordere Sitzlehne handeln kann.

Zur Vereinfachung wird im Rahmen der Erfindung der Ausdruck "Gepäckraum" stellvertretend für jedweden durch die Abdeckvorrichtung abzudeckenden Raum genutzt. Als "Tiefe" wird im Rahmen der Erfindung die sich in Längsrichtung des Fahrzeugs erstreckende Abmessung des durch die Abdeckvorrichtung abzudeckenden Bereichs verstanden. Als "Sitzanordnung" wird beispielsweise eine mehrere miteinander zusammenhängende Sitzplätze aufweisende Sitzreihe (Sitzbank) oder ein nur einen einzelnen Sitzplatz aufweisender Sitz angesehen.

In vorteilhafter Weise handelt es sich bei dem Federelement um ein Teil der Rückstelleinrichtung. Das Federelement kann entweder vorgespannt oder in seiner entspannten Form vorliegen, um die beiden Ablageformteile in Bezug auf die Grundstellung gegeneinander abzustützen. Aufgrund des Verschwenkens des zweiten, vorderen Anlageformteils gegenüber dem hinteren Ablageformteil kann so eine Rückstellkraft in dem Federelement aufgebaut oder erhöht werden, welche ausreichend ist, um das in der Klappstellung befindliche vordere Ablageformteil wieder in seine Grundstellung anzuheben.

Das Federelement kann so angeordnet und/oder vorgespannt sein, dass das zweite, vordere Ablageformteil im Kontakt mit der Rücksitzlehne einer Sitzanordnung steht. Mit anderen Worten kann das zweite, vordere Ablageformteil durchgehend an die Rücksitzlehne angelehnt sein. Bevorzugt kann das Federelement so angeordnet und/oder vorgespannt sein, dass das zweite, vordere Ablageformteil in einer Normalstellung der Sitzanordnung unter Ausbildung eines Spalts von dieser beabstandet ist. Auf diese Weise kann ein unerwünschtes Anheben des zweite, vordere Ablageformteils beim Umklappen oder Entfernen der Sitzanordnung unterbunden werden.

Die zuvor aufgezeigte erfindungsgemäße Abdeckvorrichtung ermöglicht den vollständigen Verzicht der Kopplung mit einer Sitzanordnung bei gleichzeitiger Beibehaltung ihrer dynamischen Längenveränderung im Sinne eines Verschwenkens ihres zweiten, vorderen Ablageformteils. Aufgrund der Anordnung der Rückstelleinrichtung wird das zweite, vordere Ablageformteil der Abdeckvorrichtung frei auskragend gegen das erste, hintere Ablageformteil elastisch gestützt, so dass im Zuge eines sich einstellenden Kontaktes mit der sich annähernden Sitzanordnung das zweite, vordere Ablageformteil bevorzugt nach unten in den Gepäckraum hinein klappbar ist. Dank des Verzichts auf die Kopplung zwischen Abdeckvorrichtung und Sitzanordnung ist deren jeweilige Handhabung im Ergebnis nun wesentlich erleichtert. Insbesondere die Anordnung der Rückstelleinrichtung im Sinne eines die eigentliche Schwenkachse zwischen den beiden Ablageformteilen überspannenden Scharniers erhöht die Fixierung des frei auskragenden zweiten, vorderen Ablageformteils in seiner Grundstellung derart, dass dessen mögliches Schwingen ausgeschlossen oder zumindest auf ein Minimum reduziert ist.

Weiterhin ist die Erfindung auf ein Verfahren zur Herstellung einer wie zuvor aufgezeigten, erfindungsgemäßen Abdeckvorrichtung, insbesondere einer Gepäckraumabdeckung und/oder einer Hutablage, für ein Kraftfahrzeug gerichtet.

Das erfindungsgemäße Verfahren sieht vor, dass in ein beheiztes Press- und/oder Schweiß- und/oder Formwerkzeug mindestens eine bereits ein elastisches Federelement aufweisende und nach Maßgabe eines oder mehrerer der Ansprüche 1-16 ausgebildete eine Rückstelleinrichtung eingelegt und in dem Press- und/oder Schweiß- und/oder Formwerkzeug auf ihrer dem Federelement abgewandten Seite mit einem das erste und das zweite Ablageformteil ausbildenden Faservliesmaterial in Kontakt gebracht wird und unter Einwirkung eines eine thermoplastischen Verformung des Faservliesmaterials bewirkenden Formgebungsverfahrens das Faservliesmaterials zu der das erste und das zweite Ablageformteil aufweisenden Abdeckvorrichtung ausgeformt wird. Gleichzeitig wird dabei die Rückstelleinrichtung mit den aus dem Faservliesmaterial geformten Ablageformteilen verbunden, wobei insbesondere die erste und die zweite Grundplatte der Rückstelleinrichtung an das jeweils zugeordnete erste oder zweite Ablageformteil angeschweißt werden.

Die Erfindindung wird nachstehend anhand einer Zeichnung beispielhaft näher erläutert. Diese zeigt in:
- Fig. 1: eine Seitenansicht einer erfindungsgemäßen tiefenveränderlichen Abdeckvorrichtung 1 in einer typischen Einbausituation in einem Fahrzeug in Grundstellung,
- Fig. 2: die tiefenveränderliche Abdeckvorrichtung 1 aus Fig. 1 in einer gegenüber der Grundstellung verschwenkten Klappstellung in gleicher Darstellungsweise,
- Fig. 3: einen perspektivische Ansicht der Unterseite der erfindungsgemäßen Abdeckvorrichtung,
- Fig. 4: eine erfindungsgemäße Rückstelleinrichtung der erfindungsgemäßen Abdeckvorrichtung in einer perspektivischen Detailansicht,
- Fig. 5: eine perspektivische Explosionsdarstellung der Rückstelleinrichtung nach Fig. 4,
- Fig. 6: eine weitere perspektivische Darstellung der zusammengesetzten Rückstelleinrichtung nach Fig. 4 und Fig. 5,
- Fig. 7: eine geschnittene Seitenansicht der Rückstelleinrichtung nach den Fig. 4 bis 6 in der Grundstellung des zweiten Ablageformteils der Abdeckvorrichtung und in
- Fig. 8: eine geschnittene Seitenansicht der Rückstelleinrichtung nach den Fig. 4 bis 6 in der Klappstellung des zweiten Ablageformteils der Abdeckvorrichtung.

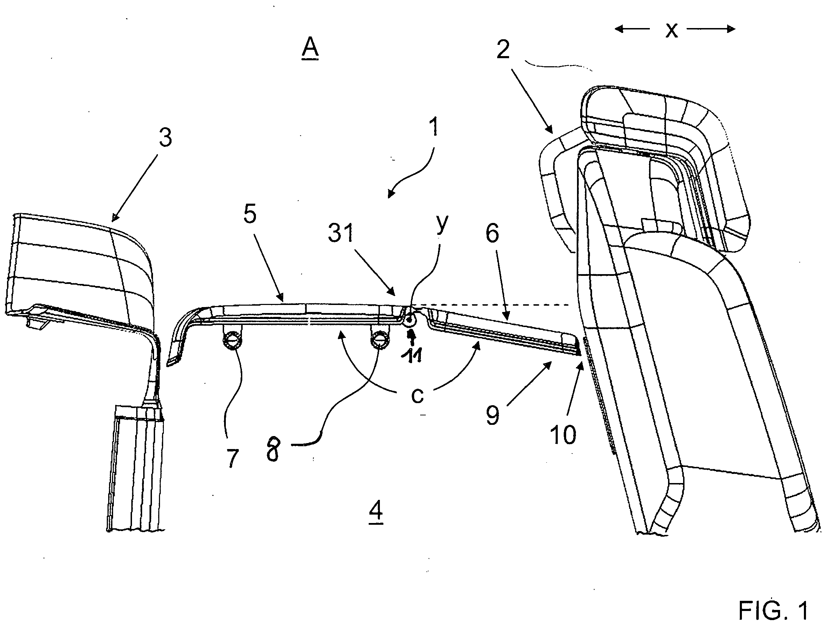

Fig. 1 zeigt in schematischer Darstellung eine tiefenveränderliche Abdeckvorrichtung 1 in Seitenansicht in ihrer typischen Einbausituation im oberen Bereich einer zugeordneten Rücksitzlehne 2 in einem nicht näher dargestellten Fahrzeug. Die Abdeckvorrichtung 1 ist über einem zwischen der Rücksitzlehne 2 einer Sitzanordnung und einem zu dieser beabstandeten Heckbereich 3 des Fahrzeugs ausgebildeten Raum angeordnet, bei welchem es sich beispielhaft um einen Gepäckraum 4 handelt. Die Rücksitzlehne 2 selbst und/oder die gesamte Sitzanordnung ist in einer hier zunächst nicht näher dargestellten Weise in ihrer Lage veränderbar, so dass diese zumindest teilweise beispielsweise in eine Längsrichtung x des Fahrzeugs verlagerbar, insbesondere verschiebbar, und/oder in ihrer Neigung verstellbar ist.

Die Abdeckvorrichtung 1 umfasst zwei gelenkig miteinander verbundene Ablageformteile 5, 6, von denen im weiteren Verlauf das dem Heckbereich 3 zugewandte hintere als erstes Ablageformteil 5 und das der Rücksitzlehne 2 zugewandte als vorderes zweites Ablageformteil 6 bezeichnet wird. Die beiden Ablageformteile 5, 6 können auf nicht näher gezeigte Weise beispielsweise zumindest teilweise materialeinheitlich einstückig und/oder durch wenigstens eine nicht näher ersichtliche, in einem Anlenkbereich 31 gelegene Scharnieranordnung gelenkig miteinander verbunden sein. Das hintere, erste Ablageformteil 5 ist in nicht näher gezeigter Weise über jeweils seitlich angeordnete Lagerzapfen 7, 8 an entsprechenden Bereichen des Fahrzeugs gelagert, so dass dieses in seiner Einbauposition ortsfest im Fahrzeug angeordnet ist. Demgegenüber ist das vordere, zweite Ablageformteil 6 frei auskragend gelenkig verschwenkbar an dem ersten Ablageformteil 5 gehalten.

In der in Fig. 1 dargestellten Grundstellung A der Abdeckvorrichtung 1 und des vorderen Ablageformteils 6 ist ein freies Ende 9 des frei auskragenden zweiten Ablageformteils 6 unter Ausbildung eines Spalts 10 von der Rücksitzlehne 2 beabstandet. Gleichzeitig ist das zweite Ablageformteil 6 gegenüber dem ersten Ablageformteil 5 um eine senkrecht zur Längsrichtung x verlaufende Schwenkachse y herum geringfügig nach unten zum Fahrzeugboden hin mit Ausrichtung zur Rücksitzlehne 2 geneigt ausgerichtet. Durch die Neigung schließen die beiden Ablageformteile 5, 6 einen Winkel c von im Ausführungsbeispiel ca. 170° zwischen sich ein. Aufgrund seiner Verschwenkbarkeit gegenüber dem ersten Ablageformteil 5 kann das zweite Ablageformteil 6 mit der verstellbaren Sitzanordnung bzw. der verstellbaren Rücksitzlehne 2 derart zusammenzuwirken, dass der Gepäckraum 4 weitestgehend von der Abdeckvorrichtung 1 grundsätzlich verdeckt ist und bleibt.

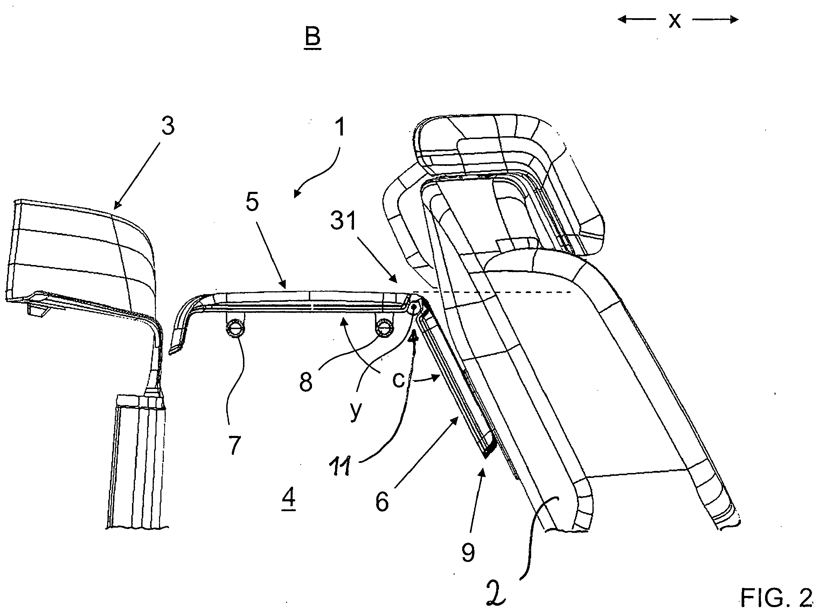

Fig. 2 zeigt nun eine, und zwar annähernd die maximale, Klappstellung B des zweiten Ablageformteils 6, welche aus einer Annäherung und Anlage eines Teils der Sitzanordnung, näher zu der Rücksitzlehne 2, in Längsrichtung x an das zweite Ablageformteil 6 resultiert. Aufgrund der sich von der Darstellung gemäß Fig. 1 zur Darstellung gemäß Fig. 2 ändernden Neigung der Rücksitzlehne 2 übt diese zur Bewegung des vorderen Ablageformteils 6 aus seiner Grundstellung A in seine Klappstellung B eine Verschwenkkraft auf das vordere Ablageformteil 6 aus, dessen freies Ende 9 von der Rücksitzlehne 2 erfasst wird. Im Schwenkbereich 31 der Abdeckvorrichtung 1 ist eine Rückstelleinrichtung 11 angeordnet, die ein Federelement 12 umfasst. Die Rückstelleinrichtung 11 ist nun derart angeordnet und ausgebildet, dass die von der Rücksitzlehne 2 ausgeübte Verschwenkkraft gegen die Rückstellkraft des Federelementes 12 wirkt, so dass die Rückstellkraft des Federelementes 12 in der Klappstellung B vorgespannt ist. Wenn dann die Rücksitzlehne 2 aus der Klappstellung B des vorderen Ablageformteils 6 in die die Grundstellung A des vorderen Formteiles 6 ermöglichende Position in Richtung der Längsrichtung x wieder zurückbewegt wird, lässt die auf das vordere Ablageformteil 6 von der Rücksitzlehne 2 ausgeübte Verschwenkkraft nach, so dass die dieser entgegenwirkende vorgespannte Rückstellkraft des Federelementes 12 das vordere Ablageformteil 6 im Maße des Nachlassens der Verschwenkkraft das Ablageformteil 6 in dessen Grundstellung A gemäß Fig. 1 zurückbewegt.

Erkennbar ist die Rücksitzlehne 2 in der Darstellung gemäß Fig. 2 gegenüber der Darstellung in Fig. 1 zum Heckbereich 3 hin geneigt ausgerichtet, wodurch das zweite Ablageformteil 6 mit seinem freien Ende 9 unter Auflösung des Spalts 10 in einen Kontakt mit der Rücksitzlehne gelangt, welche das zweite Ablageformteil 6 aus seiner Grundstellung A heraus in die Klappstellung B hinein verschwenkt. Aufgrund des Verschwenkens schließen die beiden Ablageformteile 5, 6 in der Klappstellung B nunmehr einen verkleinerten Winkel c von im Ausführungsbeispiel 117,2° zwischen sich ein.

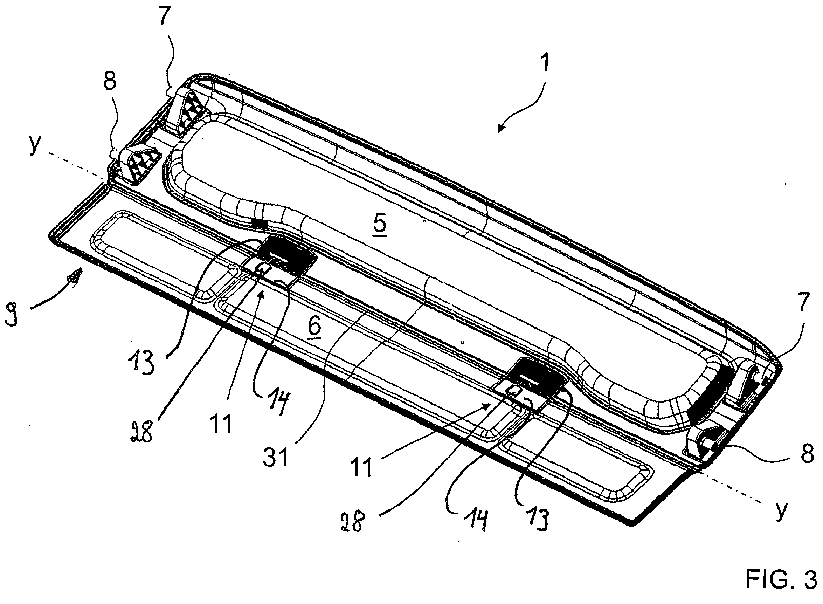

Aus Fig. 3 geht eine perspektivische Ansicht auf eine dem Gepäckraum 4 zugewandte Unterseite der Abdeckvorrichtung 1 hervor. Wie zu erkennen ist, sind die Schwenkachse y der beiden Ablageformteile 5, 6 von der Unterseite her überspannende elastisch verstellbare Rückstelleinrichtungen 11 an den Ablageformteilen 5,6 angeordnet und mit diesen verbunden. Besagte Rückstelleinrichtungen 11 sind dazu ausgebildet, das frei auskragende zweite Ablageformteil 6 gegen das erste Ablageformteil 5 jeweils mittels eines Federelements 12 elastisch abzustützen. Hierdurch ist das vordere, zweite Ablageformteil 6 ohne die Notwendigkeit einer Kopplung oder zumindest einer Abstützung an der Rücksitzlehne 2 der Sitzanordnung frei über dem Gepäckraum 4 in der Grundstellung A ausrichtbar.

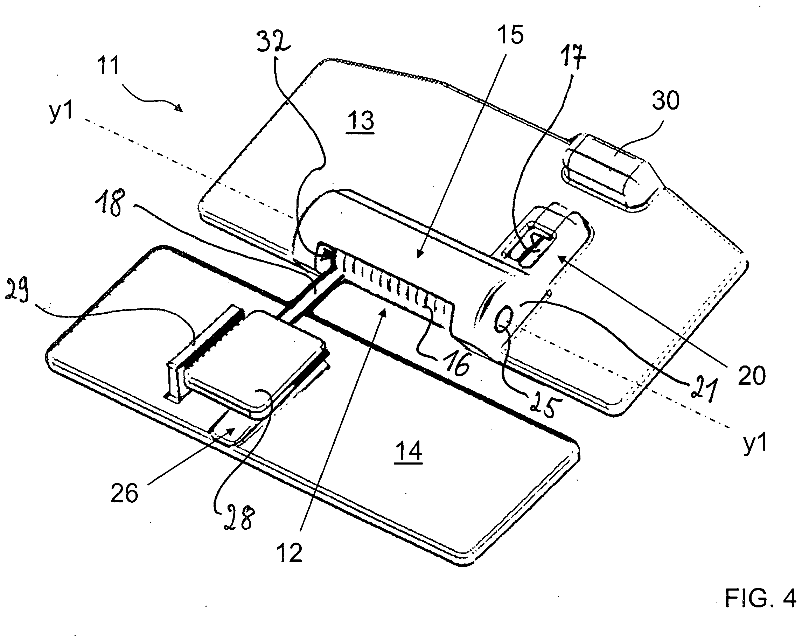

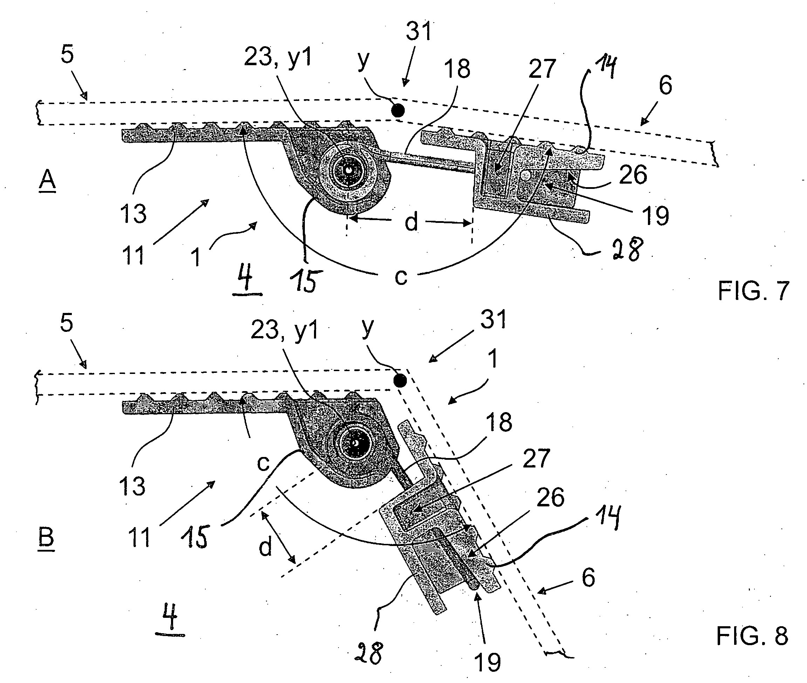

Fig. 4 zeigt eine der beiden Rückstelleinrichtungen 11 in einer perspektivischen Detailansicht. Die Rückstelleinrichtung 11 umfasst ein Federelement 12 und zwei voneinander beabstandete Grundplatten 13, 14. Von den Grundplatten 13, 14 ist eine erste Grundplatte 13 mit dem hinteren, ersten Ablageformteil 5 verbunden, während eine zweite Grundplatte 14 mit dem vorderen, zweiten Ablageformteil 6 verbunden ist, wie dies aus Fig. 3 ersichtlich ist. Erkennbar sind die beiden Grundplatten 13, 14 dabei nicht unmittelbar untereinander gekoppelt, sondern vielmehr über das Federelement 12 mittelbar miteinander gekoppelt. Die erste Grundplatte 13 weist einen der gegenüberliegenden zweiten Grundplatte 14 zugewandten Gehäuseabschnitt 15 auf, welcher das Federelement 12 zumindest teilweise umgreift und einhaust. Der im Wesentlichen als Einhausung des Federelementes 12 ausgebildete Gehäuseabschnitt 15 weist eine frontseitige Öffnung 32 auf, die zu der zweiten Grundplatte 14 hin geöffnet ist. Durch diese frontseitige Öffnung 32 ist ein zweiter Schenkel 18 des Federelementes 12 hindurch zu seiner mit der zweiten Grundplatte 14 zusammenwirkenden Position geführt. Die Höhe der frontseitigen Öffnung 32 ist dabei derart ausgeführt, dass bei einem Verschwenken von erster Grundplatte 13 und zweiter Grundplatte 14 gegeneinander um die Schwenkachse y1 der zweite Schenkel 18 die aus den Fig. 7 und 8 ersichtliche Bewegung in der frontseitigen Öffnung 32 vollziehen kann, die notwendig ist, um die Schwenkbewegung des vorderen Ablageformteils 6 aus der Grundstellung A in seine Klappstellung B und wieder zurück durchführen zu können.

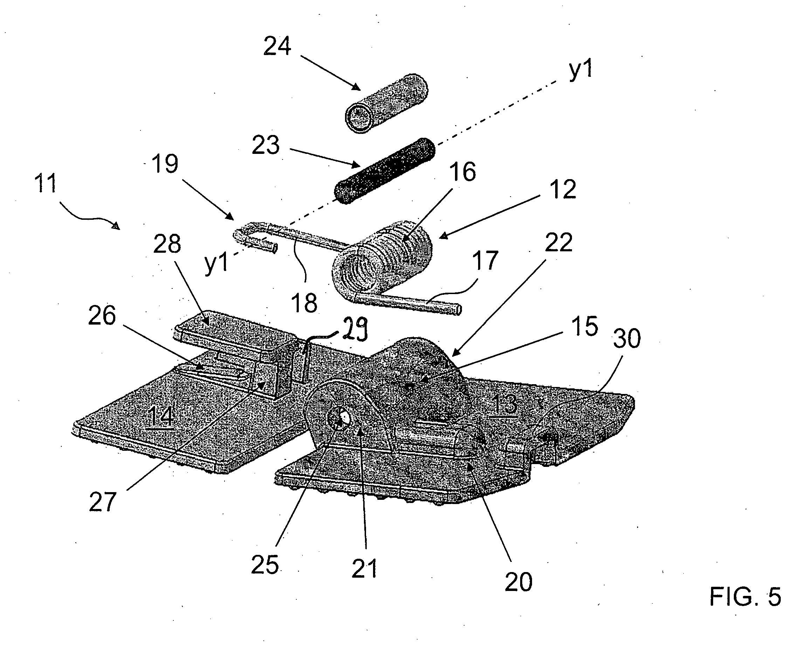

Fig. 5 verdeutlicht an einer Rückstelleinrichtung 11 die einzelnen Bestandteile in einer perspektivischen Explosionsdarstellung, die jede der beiden Rückstelleinrichtung 11 aufweist. Das Federelement 12 ist als Drehfeder oder Schenkelfeder oder Torsionsfeder ausgebildet. Im Ausführungsbeispiel weist das Federelement 12 schraubenförmig nebeneinander angeordnete Windungen 16 und zwei voneinander weg weisende abgewinkelte Schenkel 17, 18 auf. Mit Bezug auf die in Fig. 3 erkennbare Einbausituation der jeweiligen Rückstelleinrichtung 11 ist ein erster Schenkel 17 zu der ersten Grundplatte 13 und damit zu dem hinteren, ersten Ablageformteil 5 hin ausgerichtet, während ein zweiter Schenkel 18 zu der zweiten Grundplatte 14 und damit zu dem vorderen, zweiten Ablageformteil 6 hin ausgerichtet ist. Dabei ist der erste Schenkel 17 geradlinig ausgebildet, wobei der zweite Schenkel 18 einen an seinem freien Ende angeordneten Hakenabschnitt 19 aufweist. Vorliegend ist der zweite Schenkel 18 plastisch umgeformt, so dass der Hakenabschnitt 19 selbst durch den umgeformten Endabschnitt des zweiten Schenkels 18 gebildet ist.

Mit Blick auf den Gehäuseabschnitt 15 der ersten Grundplatte 13 wird deutlich, dass dieser mit einer tunnelartigen Ausstülpung 20 verbunden ist. Die Ausstülpung 20 ist dazu vorgesehen, den ersten Schenkel 17 des Federelements 12 zumindest abschnittsweise in sich aufzunehmen. Auf diese Weise ist der erste Schenkel 17 des Federelements 12 an der ersten Grundplatte 13 gehalten. Weiterhin besitzt der Gehäuseabschnitt 15 der ersten Grundplatte 13 zwei voneinander beabstandete Seitenwände 21, 22, welche die Windungen 16 des Federelements 12 zwischen sich einschließen.

Als weitere Bestandteile einer jeden Rückstelleinrichtung 11 sind ein sich in Längsrichtung um die jeweilige Schwenkachse y1 der Rückstelleinrichtung 11 bzw. deren Federelement 12 erstreckender Achskörper 23 und eine Hülse 24 vorhanden. Der Achskörper 23 ist dazu ausgebildet, an der ersten Grundplatte 13 gelagert zu werden. Hierzu weisen die Seitenwände 21, 22 des Gehäuseabschnitts 15 der ersten Grundplatte 13 geeignete Durchgangsöffnungen 25 auf, in welchen die Endabschnitte des Achskörpers 23 anordenbar sind. In seiner Anordnung an der ersten Grundplatte 13 dient der Achskörper 23 dazu, das Federelement 12 an der ersten Grundplatte 13 festzulegen. Hierzu erstreckt sich der Achskörper 23 durch die einzelnen Windungen 16 des Federelements 12 hindurch, so dass dieses quasi frei an der ersten Grundplatte 13 gehalten ist. Dabei ist die Hülse 24 zwischen den Windungen 16 des Federelements 12 und dem Achskörper 23 eingegliedert. Mit Bezug auf die Einbausituation der Fig. 3 ist ersichtlich, dass sich die jeweilige Achsrichtung y1 des Achskörpers 23 jeweils parallel zu der Schwenkachse y der beiden Formteile 5, 6 erstreckt.

Mit Blick auf die zweite Grundplatte 14 wird deutlich, dass diese eine keilförmige Gleitfläche 26 aufweist, welche zu der ersten Grundplatte 13 hin ansteigt. Weiterhin besitzt die zweite Grundplatte 14 einen senkrecht zu deren Ebene aufsteigenden Zapfen 27, welcher am höchsten Punkt der keilförmigen Gleitfläche 26 angeordnet ist. In ihrer Ausgestaltung geht die keilförmigen Gleitfläche 26 dabei in den Zapfen 27 über. Am oberen freien Ende des Zapfens 27 besitzt dieser ferner einen Überstand 28, welcher die Gleitfläche 26 sowohl in Richtung ihrer keilförmigen Erstreckung als auch zu deren beiden Seiten hin überragt.

In seiner Lage in Bezug auf die zweite Grundplatte 14 ist das Federelement 12 dabei jeweils so angeordnet, dass dessen zweiter Schenkel 18 derart über seinen Hakenabschnitt 19 an der zweite Grundplatte 14 bzw. deren Gleitfläche 26 abgestützt ist, dass mit zunehmender Entfernung der beiden Grundplatten 13, 14 voneinander der zweite Schenkel 18 zumindest abschnittsweise auf die keilförmige Gleitfläche 26 aufläuft und an dieser entlang gleitet. In der hier beschriebenen Ausführungsform ist der zweite Schenkel 18 auf diese Weise an der zweiten Grundplatte 14 in seiner Längsrichtung verschieblich geführt. Gleichzeitig ist der Zapfen 27 der zweiten Grundplatte 14 dabei zumindest teilweise von dem Hakenabschnitt 19 des zweiten Schenkels 18 umgreifbar.

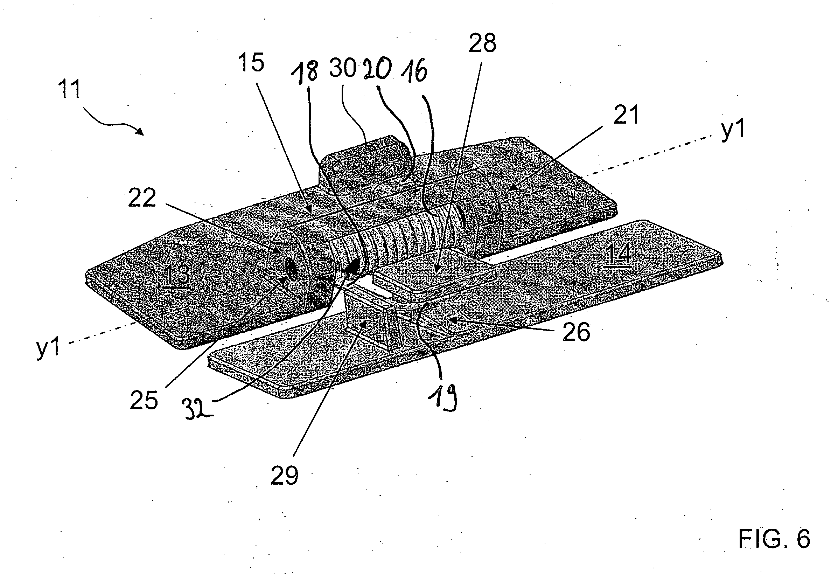

Fig. 6 zeigt nochmals eine der beiden die zusammengesetzten Rückstelleinrichtungen 11 in einer weiteren perspektivischen Darstellung. In dieser ist erkennbar, dass die zweite Grundplatte 14 zusätzlich eine zu der keilförmigen Gleitfläche 26 beabstandete Leiste 29 besitzt. Dabei ist der zweite Schenkel 18 des Federelements 12 so angeordnet, dass dieser sich zumindest abschnittsweise zwischen der Leiste 29 und der keilförmigen Gleitfläche 26 der zweiten Grundplatte 14 erstreckt. Hierdurch ist der zweite Schenkel 18 des Federelements 12 auch während seiner Verlagerung relativ zu der zweiten Grundplatte 14 durch die zuvor aufgezeigten einzelnen Elemente konstruktiv geführt.

Die Fig. 7 und 8 zeigen die von den Formteilen 5, 6 der Abdeckvorrichtung 1, insbesondere Gepäckraumabdeckung und/oder Hutablage, getragene mindestens eine Rückstelleinrichtung 11 in einer geschnittenen Seitenansicht. Analog zu den Fig. 1 und 2 zeigen die Fig. 7 die Grundstellung A und Fig. 8 die Klappstellung B des vorderen Ablageformteils 6 und die jeweils korrespondierende Stellung einer Rückstelleinrichtung 11 mit der jeweiligen Relativposition der beiden Grundplatten 13, 14 zueinander und insbesondere des zweiten Federschenkels 18 zu den beiden Grundplatten 13, 14.

Beginnend bei Fig. 7 ist ersichtlich, dass die Rückstelleinrichtung 11 die zwischen den nur angedeutet dargestellten Ablageformteilen 5, 6 gelegene Schwenkachse y im Anlenkbereich 31 überspannt. Hierbei ist zu betonen, dass die durch die Achsrichtung y1 des Achskörpers 23 bauliche vorgegebene Drehachse der Rückstelleinrichtung 11 nicht der Schwenkachse y der Abdeckvorrichtung 1 entspricht. In der in Fig. 7 gezeigten Grundstellung A schließen die beiden Ablageformteile 5, 6 den Winkel c von 170° zwischen sich ein, in welchem der Hakenabschnitt 19 des zweiten Schenkels 18 des Federelements 12 an dem Zapfen 27 der zweiten Grundplatte 14 anliegt. Durch den Kontakt zwischen dem Hakenabschnitt 19 und dem Zapfen 27 ist eine Begrenzung etabliert, welches ein über den vorliegenden Winkel c von 170° hinausgehendes Anheben des hinteren Formteils 6 blockiert. In dieser Stellung ist der vorliegend zwischen der Achsrichtung y1 des Achskörpers 23 und einer der ersten Grundplatte 13 zugewandten Kante des Zapfens 27 gemessener Abstand d maximal.

Fig. 8 verdeutlicht die Veränderung des Abstandes d bei einem Verschwenken des vorderen, zweiten Ablageformteils 6 in die hier gezeigte maximale Klappstellung B, in welcher die beiden Ablageformteile 5, 6 vorliegend einen Winkel c von 117,2° zwischen sich einschließen. Wie zu erkennen ist, bewirkt die außerhalb der Achsrichtung y1 des Achskörpers 23, und zwar oberhalb seitlich in Richtung in Richtung Front des Fahrzeugs versetzt zur Schwenkachse y1 der Rückstelleinrichtung 11 liegende Schwenkachse y zwischen den beiden Ablageformteilen 5, 6 eine Annäherung der zweiten Grundplatte 14 an die erste Grundplatte 13 der Rückstelleinrichtung 11, wodurch der Abstand d entsprechend verkleinert wird. In der maximalen Klappstellung B ist insofern der aus Fig. 7 hervorgehende Kontakt zwischen dem Hakenabschnitt 19 des zweiten Schenkels 18 des Federelements 12 und dem Zapfen 27 der zweiten Grundplatte 14 aufgehoben. Aufgrund der Verringerung des Abstandes d ist der Hakenabschnitt 19 nunmehr entsprechend weit von dem Zapfen 27 entfernt. Beim Zurückschwenken aus der Klappstellung B in die Grundstellung A gleitet der zweite Schenkel 18 an der keilförmigen Gleitfläche 26 entlang und drückt das vordere Ablageformteil 6 in die gewünschte Grundstellung A, in welcher der Hakenabschnitt 19 an dem Zapfen 27 anliegt.

### Bezugszeichenliste:

- 1: Abdeckvorrichtung
- 2: Rücksitzlehne
- 3: Heckbereich
- 4: Raum, hier: Gepäckraum
- 5: erstes hinteres Ablageformteil
- 6: erstes vorderes Ablageformteil
- 7: Lagerzapfen
- 8: Lagerzapfen
- 9: freies Ende
- 10: Spalt zwischen
- 11: Rückstelleinrichtung
- 12: Federelement
- 13: erste Grundplatte
- 14: zweite Grundplatte
- 15: Gehäuseabschnitt
- 16: Windung(en)
- 17: erster Schenkel
- 18: zweiter Schenkel
- 19: Hakenabschnitt
- 20: Ausstülpung
- 21: Seitenwand
- 22: Seitenwand
- 23: Achskörper
- 24: Hülse
- 25: Durchgangsöffnung
- 26: keilförmige Gleitfläche
- 27: Zapfen
- 28: Überstand
- 29: Leiste 30 taschenförmige Erhebung
- 31: Anlenkbereich
- 32: frontseitige Öffnung
- A: Grundstellung B Klappstellung
- c: Winkel zwischen
- d: Abstand
- x: Längsrichtung
- y: Schwenkachse
- y1: Achsrichtung ; Schwenkachse

## Patentansprüche

1. Abdeckvorrichtung (1), die ein erstes, in einem Kraftfahrzeug anordenbares, in seiner Einbauposition im Kraftfahrzeug hinteres Ablageformteil (5) und ein in einem Anlenkbereich (31) an das erste Ablageformteil (5) um eine Schwenkachse (Y) verschwenkbar angelenktes zweites, in seiner Einbauposition im Kraftfahrzeug einem oberen Bereich einer Rücksitzlehne (2) zugewandtes, vorderes Ablageformteil (6) sowie mindestens eine den die Schwenkachse (Y) umfassenden Anlenkbereich (31) übergreifende und ein elastisches Federelement (12) aufweisende Rückstelleinrichtung (11) umfasst, die an dem ersten und dem zweiten Ablageformteil (5, 6) befestigt ist und die in der Einbauposition von erstem und zweitem Ablageformteil (5, 6) im Kraftfahrzeug bei Angreifen einer von der Rücksitzlehne (2) auf das zweite Ablageformteil (6) ausgeübten Verschwenkkraft ein Verschwenken des zweiten Ablageelementes (6) aus seiner Grundstellung (A) gegen die von dem elastischen Federelement (12) ausgeübte Rückstellkraft in eine Klappstellung (B) ermöglicht, wobei die von dem Federelement (12) ausgehende vorgespannte Rückstellkraft bei Nachlassen oder Fortfall der von der Rücksitzlehne (2) ausgeübten Verschwenkkraft das zweite Ablageformteil (6) in seine Grundstellung (A) zurückbewegt, wobei das zweite Ablageformteil (6) in seiner Grundstellung (A) eine durch die Rückstellkraft des an einer keilförmigen Gleitfläche (26) der mindestens einen Rückstelleinrichtung (11) entlanggeführten Federelementes (12) bewirkte, zur Ausrichtung des ersten Ablageformteils (5) geringfügig geneigt ausgerichtete Position aufweist und einnimmt, die in der Einbauposition der Abdeckvorrichtung (1) im Kraftfahrzeug eine geringfügig auf die Rücksitzlehne (2) zu geneigte Ausrichtung ausbildet, und wobei die den Anlenkbereich übergreifende mindestens eine Rückstelleinrichtung (11) zwei voneinander beabstandete Grundplatten (13, 14) umfasst, von denen die erste Grundplatte (13) mit dem hinteren Ablageformteil (5) und die zweite Grundplatte (14) mit dem vorderen Ablageformteil (6) verbunden ist, wobei die erste und die zweite Grundplatte (14, 15) mittels des den Anlenkbereich übergreifenden Federelements (12) gegeneinander verschwenkbar miteinander gekoppelt sind, und wobei die keilförmige Gleitfläche (26) an der zweiten Grundplatte (14) der mindestens einen Rückstelleinrichtung (11) ausgebildet ist und zu dem ersten Ablageformteil (5) und zu der ersten Grundplatte (13) hin mit einer Steigung zwischen 5° und 10° ansteigt und ein Schenkel (18) des Federelementes (12) beim gegeneinander Verschwenken von erstem und zweitem Ablageformteil (5, 6) über einen Hakenabschnitt (19) abgestützt an der Gleitfläche (26) entlanggleitet, wobei das an der keilförmige Gleitfläche (26) entlanggeführte Federelement (12) den Hakenabschnitt (19) an einem freien Ende eines Schenkels (18) aufweist, der mit einem an der höchsten Stelle der keilförmigen Gleitfläche (26) auf deren dem ersten Ablageformteil (5) und der ersten Grundplatte (13) zugewandten Seite angeordneten und bei Erreichen der Grundstellung (A) des zweiten Ablageformteils (6) als Anschlag für den Hakenabschnitt (19) wirkenden Zapfen (27) zusammenwirkt, den der Hakenabschnitt (19) bei Erreichen der Grundstellung (A) zumindest teilweise umgreift.

2. Abdeckvorrichtung (1) nach Anspruch 1, **dadurch gekennzeichnet, dass** der keilförmigen Gleitfläche (26) eine seitlich beabstandet zu dieser an dem zweiten Ablageformteil (6) und/oder der mindestens einen Rückstelleinrichtung (11) angeordnete Leiste (29) zugeordnet ist, wobei das Federelement (12) zumindest bereichsweise zwischen der Leiste (29) und der keilförmigen Gleitfläche (26) geführt angeordnet ist.

3. Abdeckvorrichtung (1) nach Anspruch 1 oder 2, **dadurch gekennzeichnet, dass** der keilförmigen Gleitfläche (26) ein vertikal beabstandet zu dieser an dem zweiten Ablageformteil (6) und/oder der mindestens einen Rückstelleinrichtung (11), angeordneter Überstand (28) zugeordnet ist, welcher die keilförmige Gleitfläche (26) in Längsrichtung zumindest teilweise überspannt und seitlich überragt.

4. Abdeckvorrichtung (1) nach Anspruch 3, **dadurch gekennzeichnet, dass** der Überstand an dem die keilförmige Gleitfläche (26) überragenden Zapfen (27) befestigt ist.

5. Abdeckvorrichtung (1) nach einem der vorhergehenden Ansprüche, **dadurch gekennzeichnet, dass** die Neigung zwischen erstem und zweitem Ablageformteil (5, 6) in der Grundstellung (A) des zweiten Ablageformteils (6) 8° bis 12°, insbesondere 10°, beträgt und/oder die beiden Ablageformteile (5, 6) einen Winkel (c) zwischen sich einschließen, der in der Grundstellung (A) des zweiten Ablageformteils (6) 172° bis 168°, insbesondere 170°, beträgt.

6. Abdeckvorrichtung (1) nach einem der vorhergehenden Ansprüche, **dadurch gekennzeichnet, dass** das erste, hintere Ablageformteil (5) in seiner Einbauposition ortsfest im Kraftfahrzeug anordenbar ausgebildet ist.

7. Abdeckvorrichtung (1) nach einem der vorhergehenden Ansprüche, **dadurch gekennzeichnet, dass** die beiden Ablageformteile (5, 6) zumindest teilweise materialeinheitlich einstückig und/oder durch wenigstens eine Scharnieranordnung oder eine scharnierartig wirkende Materialverbindung gelenkig miteinander verbunden sind.

8. Abdeckvorrichtung (1) nach einem der vorhergehenden Ansprüche, **dadurch gekennzeichnet, dass** das Federelement (12) der Rückstelleinrichtung (11) als Torsions- oder Drehfeder ausgebildet ist, wobei ein erster Schenkel (17) der Torsions- oder Drehfeder an der ersten Grundplatte (13) gehalten ist und ein zweiter Schenkel (18) an der zweiten Grundplatte (14) verschiebbar geführt ist.

9. Abdeckvorrichtung (1) nach einem der vorhergehenden Ansprüche, **gekennzeichnet durch** einen an der mindestens einen Rückstelleinrichtung (11) gelagerten Achskörper (23), welcher sich in einer parallel zu der Schwenkachse (y) beabstandeten Achsrichtung (y1) derart durch Windungen (16) des Federelements (12) hindurch erstreckt, dass das Federelement (12) an der mindestens einen Rückstelleinrichtung (11) festgelegt ist.

10. Abdeckvorrichtung (1) nach einem der vorhergehenden Ansprüche, **dadurch gekennzeichnet, dass** die mindestens eine Rückstelleinrichtung (11) einen Windungen (16) des Federelements (12) zumindest teilweise umgreifenden Gehäuseabschnitt (15) aufweist, welcher zwei die umgegriffenen Windungen (16) des Federelements (12) zwischen sich einschließende Seitenwände (21, 22) aufweist.

11. Abdeckvorrichtung (1) nach Anspruch 10, **dadurch gekennzeichnet, dass** in oder an den beiden Seitenwänden (21, 22) des Gehäuseabschnitts (15) ein oder der sich durch Windungen (16) des Federelements (12) hindurch erstreckender Achskörper (23) gelagert ist.

12. Abdeckvorrichtung (1) nach Anspruch 11, **gekennzeichnet durch** eine zwischen den Windungen (16) des Federelements (12) und dem Achskörper (23) eingegliederte Hülse (24).

13. Abdeckvorrichtung (1) nach einem der vorhergehenden Ansprüche, **dadurch gekennzeichnet, dass** das erste und das zweite Ablageformteil (5, 6) einen Winkel (c) zwischen sich einschließen, der zwischen 172° in der Grundstellung (A) des zweiten Ablageformteils (6) und 115° in der Klappstellung (B) des zweiten Ablageformteils (6) variiert.

14. Abdeckvorrichtung (1) nach einem der vorhergehenden Ansprüche, **dadurch gekennzeichnet, dass** sie Bestandteil einer Gepäckraumabdeckung eines eine Heckklappe aufweisenden Kraftfahrzeugs ist.

15. Abdeckvorrichtung (1) nach einem der vorhergehenden Ansprüche, **dadurch gekennzeichnet, dass** die mindestens eine Rückstelleinrichtung (11) auf ihrer die keilförmigen Gleitfläche (26) und/oder das Federelement (12) tragenden Seite eine aufrecht hervorstehende taschenförmige Erhebung (30) aufweist, die an eine in einem Schweiß- und/oder Press- und/oder Formwerkzeug entsprechend ausgeformte Vertiefung angepasst ist, in welche die Erhebung (30) bei der Herstellung von erstem und zweitem Ablageformteil (5,6) mittels eines thermischen Formgebungsverfahrens einlegbar ist.

16. Abdeckvorrichtung (1) nach einem der vorhergehenden Ansprüche, **dadurch gekennzeichnet, dass** das erste und das zweite Ablageformteil (5, 6) als ein einteiliges Faservliesformteil ausgebildet und insbesondere mittels eines thermischen Formgebungsverfahrens hergestellt sind.

17. Verfahren zur Herstellung einer Abdeckvorrichtung (1) nach einem der Ansprüche 1 - 16 für ein Kraftfahrzeug,
**dadurch gekennzeichnet,**
**dass** in ein beheiztes Press- und/oder Schweiß- und/oder Formwerkzeug mindestens eine bereits ein elastisches Federelement (12) aufweisende und nach Maßgabe eines oder mehrerer der Ansprüche 1 - 16 ausgebildete Rückstelleinrichtung (11) eingelegt und in dem Press- und/oder Schweiß- und/oder Formwerkzeug auf ihrer dem Federelement (12) abgewandten Seite mit einem das erste und das zweite Ablageformteil (5, 6) ausbildenden Faservliesmaterial in Kontakt gebracht wird und unter Einwirkung eines eine thermoplastischen Verformung des Faservliesmaterials bewirkenden Formgebungsverfahrens das Faservliesmaterials zu der das erste und das zweite Ablageformteil (5, 6) aufweisenden Abdeckvorrichtung (1) ausgeformt wird, wobei gleichzeitig die mindestens eine Rückstelleinrichtung (11) mit den aus dem Faservliesmaterial geformten Ablageformteilen (5,6) verbunden wird.

## Claims

1. Covering device (1) which comprises a first shaped shelf part (5), which can be arranged in a motor vehicle and is at the rear in its installed position in the motor vehicle, and a second, front shaped shelf part (6) which is coupled in a coupling region (31) to the first shaped shelf part (5) so as to be pivotable about a pivot axis (Y) and, in its installed position in the motor vehicle, faces an upper region of a rear seat back (2), and at least one resetting device (11) which engages over the coupling region (31) containing the pivot axis (Y), has an elastic spring element (12), is fastened to the first and to the second shaped shelf part (5, 6) and, in the installed position of the first and second shaped shelf part (5, 6) in the motor vehicle, permits pivoting of the second shelf element (6) from its basic position (A) into a folded position (B) counter to the resetting force, which is exerted by the elastic spring element (12), under the action of a pivoting force exerted on the second shaped shelf part (6) from the rear seat back (2), wherein, when the pivoting force exerted by the rear seat back (2) decreases or ceases, the prestressed resetting force emanating from the spring element (12) moves the second shaped shelf part (6) back into its basic position (A), wherein the second shaped shelf part (6), in its basic position (A), has and adopts a position which is brought about by the resetting force of the spring element (12), which is guided along a wedge-shaped sliding surface (26) of the at least one resetting device (11), is aligned in a slightly inclined manner in order to align the first shaped shelf part (5) and, in the installed position of the covering device (1) in the motor vehicle, forms an alignment inclined slightly towards the rear seat back (2), and wherein the at least one resetting device (11) engaging over the coupling region comprises two base plates (13, 14) which are spaced apart from each other and of which the first base plate (13) is connected to the rear shaped shelf part (5) and the second base plate (14) is connected to the front shaped shelf part (6), wherein the first and the second base plate (14, 15) are coupled to each other so as to be pivotable in relation to each other by means of the spring element (12) engaging over the coupling region, and wherein the wedge-shaped sliding surface (26) is formed on the second base plate (14) of the at least one resetting device (11) and rises towards the first shaped shelf part (5) and towards the first base plate (13) with a slope of between 5° and 10°, and, when first and second shaped shelf part (5, 6) pivot in relation to each other, a leg (18) of the spring element (12) slides, supported via a hook portion (19), along the sliding surface (26), wherein the spring element (12) which is guided along the wedge-shaped sliding surface (26) has the hook portion (19) at a free end of a leg (18), said hook portion interacting with a pin (27) which is arranged at the highest point of the wedge-shaped sliding surface (26), on the side thereof which faces the first shaped shelf part (5) and the first base plate (13), and, on reaching the basic position (A) of the second shaped shelf part (6), acts as a stop for the hook portion (19), and is at least partially engaged around by the hook portion (19) on reaching the basic position (A).

2. Covering device (1) according to Claim 1, **characterized in that** the wedge-shaped sliding surface (26) is assigned a strip (29) which is arranged laterally spaced apart therefrom on the second shaped shelf part (6) and/or on the at least one resetting device (11), wherein the spring element (12) is arranged guided at least in regions between the strip (29) and the wedge-shaped sliding surface (26).

3. Covering device (1) according to Claim 1 or 2, **characterized in that** the wedge-shaped sliding surface (26) is assigned a projecting length (28) which is arranged spaced apart vertically therefrom on the second shaped shelf part (6) and/or on the at least one resetting device (11) and at least partially spans the wedge-shaped sliding surface (26) in the longitudinal direction and projects laterally over same.

4. Covering device (1) according to Claim 3, **characterized in that** the projecting length is fastened to the pin (27) projecting over the wedge-shaped sliding surface (26).

5. Covering device (1) according to one of the preceding claims, **characterized in that**, in the basic position (A) of the second shaped shelf part (6), the inclination between first and second shaped shelf part (5, 6) is 8° to 12°, in particular 10°, and/or the two shaped shelf parts (5, 6) enclose an angle (c) between them which, in the basic position (A) of the second shaped shelf part (6), is 172° to 168°, in particular 170°.

6. Covering device (1) according to one of the preceding claims, **characterized in that** the first rear shaped shelf part (5) is designed such that, in its installed position, it can be arranged in a positionally fixed manner in the motor vehicle.

7. Covering device (1) according to one of the preceding claims, **characterized in that** the two shaped shelf parts (5, 6) are connected to each other integrally at least partially with the same material and/or in an articulated manner by means of at least one hinge arrangement or a material connection acting in the manner of a hinge.

8. Covering device (1) according to one of the preceding claims, **characterized in that** the spring element (12) of the resetting device (11) is designed as a torsion spring, wherein a first leg (17) of the torsion spring is held on the first base plate (13) and a second leg (18) is guided displaceably on the second base plate (14).

9. Covering device (1) according to one of the preceding claims, **characterized by** a spindle body (23) which is mounted on the at least one resetting device (11) and extends in an axial direction (y1), which is spaced parallel to the pivot axis (y), through coils (16) of the spring element (12) in such a manner that the spring element (12) is secured on the at least one resetting device (11).

10. Covering device (1) according to one of the preceding claims, **characterized in that** the at least one resetting device (11) has a housing portion (15) which at least partially engages around coils (16) of the spring element (12) and which has two side walls (21, 22) enclosing the engaged-around coils (16) of the spring element (12) between them.

11. Covering device (1) according to Claim 10, **characterized in that** a or the spindle body (23) extending through coils (16) of the spring element (12) is mounted in or on the two side walls (21, 22) of the housing portion (15).

12. Covering device (1) according to Claim 11, **characterized by** a sleeve (24) which is incorporated between the coils (16) of the spring element (12) and the spindle body (23).

13. Covering device (1) according to one of the preceding claims, **characterized in that** the first and the second shaped shelf part (5, 6) enclose an angle (c) between them which varies between 172° in the basic position (A) of the second shaped shelf part (6) and 115° in the folded position (B) of the second shaped shelf part (6).

14. Covering device (1) according to one of the preceding claims, **characterized in that** it is part of a luggage compartment covering of a motor vehicle having a tailgate.

15. Covering device (1) according to one of the preceding claims, **characterized in that** the at least one resetting device (11) has, on its side carrying the wedge-shaped sliding surface (26) and/or the spring element (12), a pocket-shaped elevation (30) which protrudes vertically and is matched to a depression which is correspondingly formed in a welding and/or pressing and/or moulding tool and into which the elevation (30) can be placed during production of the first and second shaped shelf part (5, 6) by means of a thermal shaping process.

16. Covering device (1) according to one of the preceding claims, **characterized in that** the first and the second shaped shelf part (5, 6) are designed as a single-part shaped fibre-fleece part and are produced in particular by means of a thermal shaping process.

17. Method for producing a covering device (1) according to one of Claims 1-16 for a motor vehicle, **characterized in that** at least one resetting device (11) which already has an elastic spring element (12) and is designed according to one or more of Claims 1-16 is placed into a heated pressing and/or welding and/or moulding tool and, in the pressing and/or welding and/or moulding tool, is brought into contact on its side facing away from the spring element (12) with a fibre-fleece material forming the first and the second shaped shelf part (5, 6) and, under action of a shaping process bringing about thermoplastic deformation of the fibre-fleece material, the fibre-fleece material is shaped to form the covering device (1) having the first and the second shaped shelf part (5, 6), wherein the at least one resetting device (11) is at the same time connected to the shaped shelf parts (5, 6) formed from the fibre-fleece material.

## Revendications

1. Dispositif de recouvrement (1), qui comprend une première pièce moulée de support arrière (5), pouvant être disposée dans un véhicule à moteur, à l'arrière dans sa position de montage dans le véhicule à moteur, et une pièce moulée de support avant (6) articulée de manière pivotante dans une zone d'articulation (31) par rapport à la première pièce moulée de support (5) autour d'un axe de pivotement (Y), orientée dans sa position de montage dans le véhicule à moteur vers une zone supérieure d'un dossier de siège arrière (2), ainsi qu'au moins un dispositif de rappel (11) venant en prise avec la zone d'articulation (31) comprenant l'axe de pivotement (Y) et comprenant un élément à ressort élastique (12), qui est fixé à la première et à la deuxième pièce moulée de support (5, 6) et qui permet, dans la position de montage de la première et de la deuxième pièce moulée de support (5, 6) dans le véhicule à moteur, lors de l'application d'une force de pivotement exercée par le dossier du siège arrière (2) sur la deuxième pièce moulée de support (6), un pivotement du deuxième élément de support (6) de sa position de base (A) contre la force de rappel exercée par l'élément à ressort élastique (12) vers une position repliée (B), la force de rappel provenant de l'élément à ressort (12) déplaçant à nouveau la deuxième pièce moulée de support (6) vers sa position de base (A) lorsque la force de pivotement exercée par le dossier de siège arrière (2) faiblit ou disparaît, la deuxième pièce moulée de support (6) présentant et adoptant, dans sa position de base (A), une position orientée de manière faiblement inclinée par rapport à l'orientation de la première pièce moulée de support (5), provoquée par la force de rappel de l'élément à ressort (12) guidé le long d'une surface de glissement cunéiforme (26) de l'au moins un dispositif de rappel (11), qui constitue, dans la position de montage du dispositif de recouvrement (1) dans le véhicule à moteur, une orientation faiblement inclinée vers le dossier de siège arrière (2) et l'au moins un dispositif de rappel (5), venant en prise avec la zone d'articulation, comprenant deux plaques de base (13, 14) distantes entre elles, dont la première plaque de base (13) est reliée avec la pièce moulée de support arrière (5) et la deuxième plaque de base (14) est reliée avec la pièce moulée de support avant (6), la première et la deuxième plaque de base (14, 15) étant couplées entre elles de manière pivotante au moyen de l'élément à ressort (12), venant en prise avec la zone d'articulation, et la surface de glissement cunéiforme (26) étant réalisée sur la deuxième plaque de base (14) de l'au moins un dispositif de rappel (11) et montant en direction de la première pièce moulée de support (5) et de la première plaque de base (13) avec une pente entre 5° et 10° et une branche (18) de l'élément à ressort (12) glissant le long de la surface de glissement (26), appuyé contre une portion à crochet (19), lors d'un pivotement mutuel de la première et de la deuxième pièce moulée de support (5, 6), l'élément à ressort (12) guidé le long de la surface de glissement cunéiforme (26) comprenant la portion à crochet (19) au niveau d'une extrémité libre d'une branche (18), qui interagit avec un pivot (27), disposé au niveau du point le plus haut de la surface de glissement cunéiforme (26), sur son côté orienté vers la première pièce moulée de support (5) et vers la première plaque de base (13) et agissant, lorsque la position de base (A) de la deuxième pièce moulée de support (6) est atteinte, comme une butée pour la portion à crochet (19), que la portion à crochet (19) entoure au moins partiellement lorsque la position de base (A) est atteinte.

2. Dispositif de recouvrement (1) selon la revendication 1, **caractérisé en ce que** la surface de glissement cunéiforme (26) comprend un tasseau (29) distant latéralement de celle-ci, disposé au niveau de la deuxième pièce moulée de support (6) et/ou de l'au moins un dispositif de rappel (11), l'élément à ressort (12) étant disposé de façon à être guidé au moins par endroits entre le tasseau (29) et la surface de glissement cunéiforme (26).

3. Dispositif de recouvrement (1) selon la revendication 1 ou 2, **caractérisé en ce que** la surface de glissement cunéiforme (26) comprend un surplomb (28) distant verticalement de celle-ci, disposé au niveau de la deuxième pièce moulée de support (6) et/ou de l'au moins un dispositif de rappel (11), qui enjambe la surface de glissement cunéiforme (26) au moins partiellement dans la direction longitudinale et dépasse latéralement de celle-ci.

4. Dispositif de recouvrement (1) selon la revendication 3, **caractérisé en ce que** le surplomb est fixé au pivot (27) dépassant de la surface de glissement cunéiforme (26).

5. Dispositif de recouvrement (1) selon l'une des revendications précédentes, **caractérisé en ce que** l'inclinaison entre la première et la deuxième pièce moulée de support (5, 6) dans la position de base (A) de la deuxième pièce moulée de support (6) est de 8° à 12°, plus particulièrement de 10° et/ou les deux pièces moulées de support (5, 6) présentent entre elles un angle (c) qui est, dans la position de base (A) de la deuxième pièce moulée de support (6), de 172° à 168°, plus particulièrement de 170°.

6. Dispositif de recouvrement (1) selon l'une des revendications précédentes, **caractérisé en ce que** la première pièce moulée de support arrière (5) est conçue de façon à être disposée de manière fixe sur le véhicule à moteur dans sa position de montage.

7. Dispositif de recouvrement (1) selon l'une des revendications précédentes, **caractérisé en ce que** les deux pièces moulées de support (5, 6) constituent au moins partiellement une seule pièce, d'un seul tenant et/ou sont articulées entre elles par l'intermédiaire d'au moins une charnière ou d'une liaison de matière agissant comme une charnière.

8. Dispositif de recouvrement (1) selon l'une des revendications précédentes, **caractérisé en ce que** l'élément à ressort (12) du dispositif de rappel (11) est conçu comme un ressort de torsion, une première branche (17) du ressort de torsion étant maintenu sur la première plaque de base (13) et une deuxième branche (18) étant guidée de manière mobile le long de la deuxième plaque de base (14).

9. Dispositif de recouvrement (1) selon l'une des revendications précédentes, **caractérisé par** un corps axial (23) logé au niveau de l'au moins un dispositif de rappel (11), qui s'étend dans une direction axiale (y1) parallèle à l'axe de pivotement (y), à travers des spires (16) de l'élément à ressort (12), de façon à ce que l'élément à ressort (12) soit fixé au niveau de l'au moins un dispositif de rappel (11).

10. Dispositif de recouvrement (1) selon l'une des revendications précédentes, **caractérisé en ce que** l'au moins un dispositif de rappel (11) comprenne une portion de boîtier (15) entourant au moins partiellement des spires (16) de l'élément à ressort (12), qui comprend les spires (16) entourées de l'élément à ressort (12) entre des parois latérales (21, 22) qui se rejoignent.

11. Dispositif de recouvrement (1) selon la revendication 10, **caractérisé en ce que**, dans ou sur les deux parois latérales (21, 22) de la portion de boîtier (15), est logé un ou le corps axial (23) s'étendant à travers des spires (16) de l'élément à ressort (12).

12. Dispositif de recouvrement (1) selon la revendication 11, **caractérisé par** un manchon (24) intégré entre les spires (16) de l'élément à ressort (12) et le corps axial (23).

13. Dispositif de recouvrement (1) selon l'une des revendications précédentes, **caractérisé en ce que** la première et la deuxième pièce moulée de support (5, 6) forment entre elles un angle (c) qui varie entre 172°, dans la position de base (A) de la deuxième pièce moulée de support (6), et 115°, dans la position repliée (B) de la deuxième pièce moulée de support (6).

14. Dispositif de recouvrement (1) selon l'une des revendications précédentes, **caractérisé en ce qu'**il fait partie d'un recouvrement de coffre à bagages d'un véhicule à moteur comprenant un hayon.

15. Dispositif de recouvrement (1) selon l'une des revendications précédentes, **caractérisé en ce que** l'au moins un dispositif de rappel (11) comprend, sur son côté supportant la surface de glissement cunéiforme (26) et/ou l'élément à ressort (12), un bossage (30) en forme de poche dépassant de manière droite, qui est adapté à une cavité de forme correspondante dans un outil de soudure et/ou de pressage et/ou de moulage, dans laquelle le bossage (30) peut être inséré lors de la fabrication de la première et de la deuxième pièce moulée de support (5, 6) au moyen d'un procédé de formage thermique.

16. Dispositif de recouvrement (1) selon l'une des revendications précédentes, **caractérisé en ce que** la première et la deuxième pièce moulée de support (5, 6) sont conçues commande une pièce moulée en tissu non tissé d'une seule pièce et plus particulièrement sont fabriquées au moyen d'un procédé de formage thermique.

17. Procédé de fabrication d'un dispositif de recouvrement (1) selon l'une des revendications 1 à 16 pour un véhicule à moteur,
**caractérisé en ce que**
dans un outil de pressage et/ou de soudage et/ou de moulage, est inséré au moins un dispositif de rappel (11) déjà muni d'un élément à ressort élastique (12) et conçu selon l'une ou plusieurs des revendications 1 à 16 et, dans l'outil de pressage et/ou de soudage et/ou de moulage, sur son côté opposé à l'élément à ressort (12), mis en contact avec un matériau non tissé constituant la première et la deuxième pièce moulée de support (5, 6) et, sous l'effet d'un procédé de formage provoquant la déformation thermoplastique du matériau non tissé, le matériau non tissé est formé afin d'obtenir le dispositif de recouvrement (1) comprenant la première et la deuxième pièce moulée de support (5, 6), l'au moins un dispositif de rappel (11) étant simultanément relié avec les pièces moulées de support (5, 6) formées à partir du matériau non tissé.
